# EUROPEAN PATENT SPECIFICATION

(11) **EP 3 201 505 B1**
(45) Date of publication and mention of the grant of the patent: **19.06.2019**
(21) Application number: 15818073.7
(22) Date of filing: 29.09.2015
(51) Int. Cl.: F16L 1/20

(54) **END FITTING HANDLING IN A MARINE PIPELINE INSTALLATION SYSTEM**
HANDHABUNG EINES ANSCHLUSSSTÜCKS IN EINEM UNTERWASSERPIPELINE-INSTALLATIONSSYSTEM
MANIPULATION D'EMBOUT DANS UN SYSTÈME D'INSTALLATION DE PIPELINE MARIN

(30) Priority: 03.10.2014 NL 2013570; 26.03.2015 NL 2014526
(43) Date of publication of application: 09.08.2017
(73) Proprietor: Itrec B.V., 3115 HH Schiedam (NL)
(72) Inventor: ROODENBURG, Joop, 3115 HH Schiedam (NL); NOUWENS, Ronny Lambertus Waltherus, 3115 HH Schiedam (NL); VEHMEIJER, Terence Willem August, 3115 HH Schiedam (NL)
(74) Representative: EP&C
(86) International application number: PCT/NL2015/050676
(87) International publication number: WO 2016/053094

(56) References cited:
- WO-A1-2007/108673
- GB-A- 2 509 597

## Description

The present invention relates to the handling of end fittings on a flexible pipeline in a marine pipeline installation system for laying an offshore pipeline and/or installing a subsea riser.

In the field of subsea pipeline installation flexible pipelines commonly do not require straightening after passage thereof over an arctuate pipeline guide as the deformation of the pipeline is well within the elastic range of the pipeline. In embodiments the flexible pipe is manufactured by wrapping of intertwining layers of high strength stainless steel and polymers. In contrast rigid pipelines are commonly carbon steel pipe which, after passing the pipeline guide, are subjected to a straightening of the pipeline by a straightener assembly in order to compensate for plastic deformation.

WO 2007/108673 discloses a marine pipeline installation system for laying an offshore pipeline and/or installing a subsea riser. This system comprises a storage reel for storage of the pipeline to be installed and a launch tower which is adapted for launching the pipeline in a firing line into the sea. A pipeline guide is mounted at an elevated position of the launch tower and provides an arctuate guide surface that extends in a vertical plane for guiding the pipeline from the storage reel into the firing line. One or more tensioners are mounted on the launch tower below the pipeline guide and serve to pay out the pipeline into the sea, whilst supporting the weight of the launched pipeline. An abandonment and recovery (A&R) system is provided which comprises an A&R cable and an associated A&R winch as well as a sheave arrangement with A&R sheaves supported by the launch tower above the one or more tensioners.

Whereas steel pipe rigid pipelines are commonly interconnected directly by welding, flexible pipelines for reel-laying are commonly provided during their production with special end fittings, in particular with end connector fittings that allow to connect a flexible pipeline to another flexible pipeline or other subsea equipment. In many embodiments the end connector fitting comprises a part that serves as the actual connector and a bend restrictor that prevents excessive bending near the actual connector part. The actual connector part e.g. includes a flange or a Grayloc connector. An end fitting present at the leading end of the pipeline, which end will enter into the sea first, is commonly identified as a first end fitting. An end fitting present at the trailing end of the pipeline, which enters into the sea last, is commonly identified as a second end fitting. Therefore a flexible pipeline may have a first end connector fitting and a second end connector fitting.

As is known in the field end connector fittings have a larger diameter than the flexible pipeline and have a different bending behaviour. In general end connector fittings are much stiffer than the flexible pipeline.

When unspooling a flexible pipeline provided with a first end connector fitting from a storage reel, the first end connector fitting has to be passed over the pipeline guide in order to then lower the first end connector fitting in the firing line and then engage the pipeline with the one or more tensioners.

It is known in the field to handle the first end connector fitting by means of a relatively small service crane, e.g. a knuckle-boom crane, that is mounted on the launch tower near the pipeline guide. The end fitting is then hooked up to the service crane and a crane operator carefully manoeuvres the end fitting so that it passes in a path over and about the arctuate guide surface of the pipeline guide so as to reach a position aligned with the firing line. An example hereof is shown in WO02/057675.

In WO2014/120004, with reference to figures 9 - 11, a known approach for handling a second end connector fitting on a flexible pipeline is disclosed. The service crane near the pipeline guide is used to pass the second end connector fitting over the pipeline guide into the firing line. Then the second end connector fitting is attached, via the end fitting adapter, to a trolley suspended from the A&R system for further lowering the second end connector along the launch tower with the tensioners in a retracted position thereof so that the trolley can pass the retracted tensioners.

The use of a service crane for handling an end fitting on a flexible pipeline places stringent requirements on the skills and experience of the service crane operator and is therefore less desirable, taking into account that the pipeline guide is at a rather great height and therefore sea-motions of the vessel may have a major impact on such an operation.

In GB 2 173 760 the problem of passing end fittings over and about a pipeline guide is addressed. Instead of the use of a service crane a flexible pipeline end fitting transfer mechanism is disclosed that is adapted to transfer an end fitting on a flexible pipeline over the pipeline guide. This known transfer mechanism comprises a transfer arm which is rotatable about a horizontal transfer arm axis so as to rotate relative to the pipeline guide. This arm has a leading side and a trailing side when seen in direction of rotation over the top of the pipeline guide towards the firing line. The transfer arm is provided, radially outward from the pipeline guide surface, with a retainer for an end fitting adapter. This adapter, in embodiments disclosed in this document, comprises two transverse trunnions on a collar that is secured to the pipeline end fitting. This known transfer mechanism allows to handle the first end connector fitting, the second end connector fitting, as well as an intermediate fitting. The use of an A-frame or similar structure as a transfer mechanism to pass end fittings on a pipeline and the like over a pipeline guide is also discussed in the introduction of GB2428080. The figure 1 of said document shows the vessel Seaway Condor, later Acergy Condor, with an A-frame that is provided with a sheave at a position radially outward of the pipeline guide surface. This sheave guides a cable to be connected to the pipeline end fitting via an end fitting adapter. A similar A-frame is disclosed in WO2005/095835 and in EP 2 685 146.

In GB2509597 a flexible pipeline end fitting transfer mechanism is disclosed that is adapted to transfer a first end fitting on a flexible pipeline over and about the pipeline guide. The transfer arm is provided, radially outward from the pipeline guide surface and at the trailing side, with a retainer for an end fitting adapter, which retainer is adapted to retain, at the trailing side of the transfer arm, a first end fitting on a flexible pipeline that is provided with an end fitting adapter. The transfer arm is further provided with a sheave at a position radially outward from the retainer. The sheave is adapted and arranged to guide a winch driven cable that is attached via the end fitting adapter to the first end fitting such that, with the transfer arm in a first end fitting pick up orientation thereof, the first end fitting is lifted and the end fitting adapter reaches the retainer allowing for engagement with the retainer whilst suspended from the cable. This known transfer mechanism is not able to handle second end fittings.

It is an object of the present invention to provide a marine pipeline installation system with a flexible pipeline end fitting transfer mechanism that is able to handle at least a first end fitting as well as a second end fitting on a flexible pipeline in an efficient and controlled manner. It is a further object to provide a transfer mechanism that is relatively compact and has a relatively limited weight whilst showing great versatility and reliability for handling both end fittings on a flexible pipeline.

The present invention provides a marine pipeline installation system according to claim 1. Advantageous features of the invention are defined in the dependent claims.

The system allows for controlled handling of the first end fitting, e.g. end connector, and the second end fitting, e.g. end connector, with ease and reliability, e.g. in view of avoiding any or undue interference of the end fitting with the pipeline guide and/or undue loads on the end fitting and/or on the pipeline in the handling process.

The provision of a first retainer and a second retainer allows for handling of both the first end fitting and the second end fitting of a pipeline.

The first and second retainer may be of similar design, but it is also envisaged that each retainer can be adapted for its specific purpose and engagement with a specific adapter or portion of the respective end fitting.

For example different load capacity requirements may be attributed to each end fitting adapter, e.g. with the second end fitting adapter being designed to support the weight of the entire seagoing pipeline whereas a first end fitting adapter will not have to support such a load. Therefore the second end fitting may be designed with a higher load capacity, e.g. with a stem that is thicker than the stem of a first end fitting adapter. The first retainer can then be adapted to engage an end fitting adapter with a stem of a first diameter and the second retainer for a stem with second diameter, the second diameter being greater than the first diameter.

In embodiments the first and second end fitting connector may differ in other features, e.g. be of significantly different design, with each retainer being adapted to the specific design.

In an embodiment an adapter includes two trunnions extending in opposite directions from a central adapter portion, with each retainer being adapted to engage on the two trunnions.

Due to the arrangement of the first and second sheaves offset from one another in direction of rotation of the transfer arm, with the first sheave at the trailing side and the second sheave at the leading side of the transfer arm, the length of the transfer arm can remain relatively limited compared to the provision of a single fixedly mounted sheave. In the latter version this single sheave would have to be more radially outward than the first and second sheave of the present transfer arm, thereby increasing the length of the arm. Increased arm length in turn requires increase of the dimensions of one or more other parts of the launch tower installation, e.g. the support frame thereof, thereby increasing mass of the installation which is in particular undesirable due to the height above deck where the pipeline guide and the transfer arm are mounted.

Preferably the first sheave and the second sheave are arranged in a common vertical plane. This advantageously allows for the winch driven cable to be passed over both the first sheave and the second sheave when used for suspending the first or the second end fitting.

In an embodiment a cable supporting continuous track extends around the first and second sheaves, which track then supports the winch driven cable.

In embodiments, as is known in the field, the pipeline guide surface may be circular, e.g. embodied as a rotating circular wheel often called an aligner wheel or diverter wheel, or semi-circular, e.g. as a chute. The guide surface may be formed, in embodiments, by a series of rollers as is known in the art, each in a semi-circular arrangement. In other embodiments the pipeline guide includes a continuous belt or track providing the arctuate guide surface.

When present a centre axis of the pipeline guide preferably coincides with the horizontal transfer arm axis so that the retainers travel through a circular or semi-circular path about this common axis.

In an embodiment wherein the pipeline guide and the transfer arm are supported by a common support frame that is movably connected, e.g. pivotally about a horizontal pivot axis, to the launch tower at an elevated position of said launch tower. An adjuster device is arranged between the support frame and the launch tower, which adjuster device is adapted to adjust the position of the support frame relative to the launch tower and thereby adjust a horizontal distance between the firing line and pipeline guide.

In an embodiment the horizontal transfer arm axis is supported on an intermediate frame member, which in turn is supported on the common support frame, e.g. a frame member pivotally connected to the common support frame and to the transfer arm, and an actuator device is arranged between the intermediate frame member and the common support frame, e.g. allowing for the one or more retainers to follow a non-circular path during the transfer of an end fitting towards the firing line.

As is preferred, in the second end fitting release orientation of the transfer arm, the second end fitting is aligned with the (preferably vertical) firing line.

It is noted that end fitting handling operations are preferably performed with the firing line vertical, e.g. with a tiltable launch tower brought in vertical orientation.

Preferably a motorized transfer arm drive is provided that is adapted to provide a driving force to rotate the transfer arm.

In an embodiment the first retainer and the second retainer are integrated in a common retainers carrier that is movable supported in the transfer arm, preferably slidable in a direction tangential to the direction of rotation of the transfer arm. In a first position of the common retainers carrier the first retainer is aligned with the first end fitting to be retained and the second retainer is retracted, and in a second position of said common retainers carrier the second retainer is aligned with the second end fitting to be retainer and the first retainer is retracted.

In an embodiment at least one, preferably each, retainer comprises a slotted member having a slot therein and with a mouth at an end of the slot allowing lateral entry of a portion of the end fitting into the slot, e.g. a stem of an end fitting adapter secured to the end fitting. Preferably each slotted retainer further is provided with a mobile locking member and associated locking member drive that allows to move the locking member between a non-operative position and a locking position wherein the locking member is positionable in a locking position wherein it blocks the slot.

In an embodiment a retainer comprises a spherical seat and the end fitting adapter comprises a mating spherical portion and a stem below said spherical portion, wherein the spherical portion can rest on the retainer seat so as to transmit tensile force to the retainer and so as to create a pendulum support for the end fitting adapter allowing for variation of angular orientation of the stem of the end fitting adapter relative to the retainer.

In an embodiment the stem of the end fitting adapter associated with the second end fitting has a larger diameter, e.g. at least twice as large, than the stem of the end fitting adapter associated with the first retainer.

In an embodiment the pipeline guide is a circular pipeline guide wheel that is rotatable about a horizontal guide wheel axis coinciding with the transfer arm rotation axis.

In an embodiment the pipeline guide and the transfer arm are supported by a support frame that is pivotally connected about a horizontal support frame pivot axis to the launch tower, wherein an adjuster device is arranged between the support frame and the launch tower to adjust the pivotal orientation of the support frame and thereby adjust the horizontal distance between the firing line and pipeline guide.

In an embodiment the system comprises a control unit linked to the support frame adjuster device and to the transfer arm drive, wherein the control unit is programmed to have a second end fitting clearance mode wherein, with the transfer arm in second end fitting release orientation with the second end fitting suspended from the cable, released from the retainer, and aligned with the firing line, the adjuster device is operated to move the support frame and thereby move the pipeline guide away from the firing line whilst simultaneous the transfer arm is rotated by the transfer arm drive so as to maintain the second end connector aligned with the firing line, at least until the pipeline guide has been cleared sufficiently from the firing line to allow for the subsequent lowering of the suspended second end fitting without interfering with the pipeline guide.

In an embodiment the installation comprises a back tension sheave that is to be mounted on a deck of the vessel, generally below the side of the pipeline guide remote from the firing line, said back tension sheave, in the transfer of a second end fitting, guiding said winch driven cable and allowing to apply back tension during said transfer.

In an embodiment each tensioner comprises a tensioner frame and multiple tracks supported by the tensioner frame, the tracks being adapted for engaging the pipeline and supporting at least part of the weight of the launched pipeline, the tensioner frame being supported via an associated support assembly, the support assembly of one or more tensioner frames being adapted to allow for displacement of the tensioner frame with respect to the tower between an active position, wherein the firing line extends through the tensioner frame and between the tracks, so that the tracks can engage on a pipeline, and a retracted non-operable position.

In an embodiment the launch tower is provided with an auxiliary trolley adapted to support the weight of the launched pipeline and suspended from the A&R cable, which trolley is movable along rails along the firing line when the one or more tensioner frames are in a retracted non-operable position, from a position above the uppermost tensioner to a position below the lowermost tensioner, the rail being supported by the launch tower.

In an embodiment the auxiliary trolley is provided with a retainer, e.g. a clamp, adapted to engage on the end fitting adapter on a second end fitting that is suspended via said winch driven cable in the firing line.

In an embodiment the transfer arm is provided with a force sensor that is adapted to measure the force exerted by the second end fitting on the second retainer, at least during rotation of the transfer arm from the second end fitting pick up orientation to the second end fitting release orientation. The system comprises a monitoring and control unit connected to said force sensor and to the one or more tensioners, the monitoring and control unit being adapted to compare the measured force with a predetermined allowable force range and to control the rotation of the transfer arm and one or more tensioners so as to maintain the force within said predetermined allowable force range.

In an embodiment the pipeline guide support frame comprises two spaced apart main legs, the spacing between said main legs allowing for the passage of the transfer arm between said main legs, each having a lower end pivotally connected to the launch tower about said horizontal support frame pivot axis, wherein the pipeline guide support frame comprises a horizontal tubular girder that is integrated with the main legs so as to form an inverted U-shape pipeline guide support frame. Preferably the tubular girder has a diameter of at least 1 metre, e.g. between 1.5 and 2.5 metre. The tubular girder has a central portion between said main legs, said central portion supporting centrally a circular pipeline guide wheel via one or more bearings encircling the tubular girder. The transfer arm comprises a structural frame that straddles the pipeline guide and has leg portions at opposite sides of the guide wheel, with each leg portion terminating at a hub including a bearing encircling the central portion of the tubular girder.

The system may further comprise an abandonment and recovery (A&R) system comprising at least one A&R cable and associated A&R winch and a sheave arrangement with one or more A&R sheaves supported by the launch tower above said one or more tensioners.

The system may further comprise a trolley mounted on the tower and suspendable from the A&R cable, e.g. as described herein, the trolley being provided with a retainer that is engageable with a pipeline end fitting.

The invention also relates to a pipelaying vessel provided with a system according to the present invention, e.g. the vessel having a hull and a moonpool and the launch tower, e.g. tiltable or non-tiltable, being arranged on the hull so that the launched pipeline passes through the moonpool into the sea.

The invention also relates to a method for handling of a flexible pipeline with one or two end fittings, wherein use is made of the system according to the present invention.

The invention will now be discussed with reference to the drawings. In the drawings:
Fig. 1 illustrates - in side view - a part of pipelaying vessel equipped with an exemplary marine pipeline installation system for laying an offshore pipeline and/or installing a subsea riser,
Fig. 2 illustrates - in side view - the upper part of the launch tower with the guide wheel and transfer arm mechanism of figure 1, with the support frame in two positions thereof,
Fig. 3 illustrates - in side view - the upper part of the launch tower with the guide wheel and transfer arm mechanism of figure 1,
Fig. 4 illustrates in a front view the guide wheel and associated support frame as well as the transfer arm mechanism,
Fig. 5 illustrates a plan view with the guide wheel and transfer arm in horizontal cross-section,
Fig. 6a illustrates the handling of a first end connector with the system of figure 1,
Fig. 6b illustrates on a larger scale a detail of figure 6a,
Fig. 7a illustrates the handling of a second end connector with the system of figure 1,
Fig. 7b illustrates on a larger scale a detail of figure 7a,
Fig. 8a illustrates in a plan view the common retainers carrier of the system of figure 1,
Fig. 8b illustrates in side view the common retainers carrier of the system of figure 1,
Fig. 9 illustrates in a view similar to figure 4 an alternative embodiment of a pipeline guide wheel and transfer arm mechanism,
Fig. 10 illustrates in side view the transfer arm of figure 9 in two positions,
Fig. 11 illustrates the handling of a first end connector with the transfer arm mechanism of figure 9,
Fig. 12 illustrates the upper part of the launch tower with the guide wheel and transfer arm mechanism with an extendable transfer arm,
Fig. 13 illustrates, schematically, the guide wheel, the frame supporting the guide wheel, and extendable transfer arm of figure 12,
Fig. 14 illustrates in vertical cross sectional view the assembly of figure 12 with the transfer arm in retracted position,
Fig. 15 illustrates in a view similar to figure 14 the extension of the transfer arm
Figs. 16 - 20 illustrate steps during the handling of a first end fitting on a flexible pipeline by means of the pipeline guide wheel and transfer arm mechanism in figures 12 - 15.

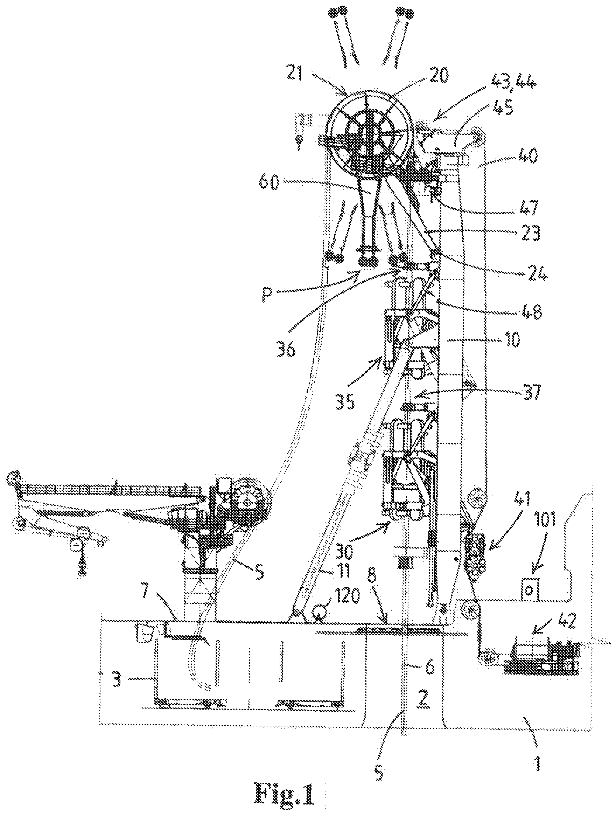

In figure 1 a portion of a hull 1 of a pipelaying vessel is shown, here equipped with a moonpool 2 via which pipelaying is performed.

A storage reel 3 for flexible pipeline 5 to be installed, e.g. to be laid on the seabed and/or to serve as a marine riser or part thereof, is supported by the vessel. In this example a vertical axis reel 3, or basket, is installed below deck 7 of the vessel but such a basket can also be installed above deck when desired. In another embodiment the storage reel 3 is a horizontal axis reel, e.g. permanently fitted on the vessel or an exchangeable reel, e.g. arranged on a skid cart that is skiddable on deck of the vessel.

A launch tower 10 is arranged on the hull 1, here adjacent the moonpool 2. The tower 10 is adapted for launching the pipeline 5 in a firing line 6 into the sea. In this example the tower 10 is tiltable by means of telescopic adjuster 11 to allow for variation of the angle of the firing line 6 within a tilt range including a vertical orientation of the firing line 6 which is the preferred orientation for performing end fitting handling procedures. In another embodiment the tower 10 is non-tiltable, e.g. with a permanently vertical firing line.

The tower 10 may have two main tower beams interconnected by transverse beams, e.g. with one or more retractable tensioners between said beams as is known in the field.
In other embodiments the vessel will not have a moonpool 2 through which pipelaying is performed, e.g. with the tower 10 being arranged along a side, the bow, or the stern of the vessel.

A pipeline guide 20, here a pipeline guide wheel 20, is mounted at an elevated position of the launch tower. The guide 20 provides an arctuate, here circular, guide surface 21 in an imaginary vertical plane for guiding the pipeline 5 from the storage reel 3 into the firing line 6. The wheel 20 is rotatable about horizontal wheel axis 22. Alternative names for such a pipeline guide are pipeline diverter, aligner wheel, chute, etc. instead of a rotatable wheel 20 one can also arrange pipeline guide rollers in a circular or semi-circular or similar arrangement, of which embodiments are known in the art.

In this example the flexible pipeline 5 may have a diameter between 0.10 and 0.63 meter.

The pipeline guide wheel 20 is supported by a pipeline guide support frame 23 that is pivotally connected about a horizontal support frame pivot axis 24 to the launch tower 10 at an elevated position of the launch tower.

Here the frame 23 comprises two spaced apart main legs 23a, b, the spacing between the main legs allowing for the passage of a transfer arm 60 between these legs. Each leg 23a, b has a lower end that is pivotally connected to the launch tower about the horizontal support frame pivot axis 24. The frame 23 further comprises a horizontal tubular girder 23c that is integrated with the main legs 23a, b so as to form an inverted U-shape pipeline guide support frame 23.

The tubular girder 23c has a diameter of at least 1 metre, e.g. between 1.5 and 2.5 metre, here about 2 metres and serves as the structural backbone of the frame 23.

The girder 23c may include one or more reinforcements, e.g. panels, in its interior if desired and/or the tubular girder wall may be provided with reinforcement ribs over the length thereof or the like. Due to its diameter the girder 23c can have great strength and rigidity combined with a relatively low mass which aids in keeping the mass of the combined guide wheel and transfer arm installation relatively low, which is e.g. advantageous in view of seagoing behaviour of the vessel. It is noted that in practical designs the weight may still be over 100 tonnes, e.g. about 170 tonnes.
The tubular girder 23c has a central portion between the main legs 23a, b. This central portion supports centrally the circular pipeline guide wheel 20 via one or more bearings encircling the tubular girder 23c.

An adjuster device 25 is arranged between the pipeline guide support frame 23 and the launch tower 10 and is adapted to adjust the pivotal orientation of the support frame 23 and thereby adjust the horizontal distance between the firing line 6 and pipeline guide wheel 20. In this example a hydraulic cylinder 25 is arranged between each leg 23a, b and the tower 10. Instead of a pivotal arrangement of the frame 23 one can also envisage another mobile arrangement to vary the position of the guide 20 relative to the firing line, e.g. a horizontally slidable arrangement.

The tower 10 here is provided with two tensioners 30, 35 which are mounted on
the launch tower 10 below the pipeline guide 20. As is known in the art the tensioners 30, 35 allow to support the weight of the launched pipeline 5. As explained in detail in for example WO2007/108673 and WO2014/120004, the tensioners 30, 35 comprise a tensioner frame and multiple tracks supported by the tensioner frame. These tracks are adapted for engaging the pipeline 5 and supporting the launched pipeline. Each tensioner frame is supported via an associated support assembly onto the structural frame of the tower 10. The support assembly of each tensioner frame is adapted to allow for displacement of the tensioner frame with respect to the tower between an active position (as in figure 1), wherein the firing line 6 extends through the tensioner frame and between the tracks, so that the tracks can engage on a pipeline, and a retracted non-operable position.

Above the upper tensioner 35 a retractable upper centralizer 36 is arranged on the tower allowing to maintain the pipeline 5 in the firing line, e.g. when not engaged by the tensioners. A retractable lower centralizer 37 is arranged between the tensioners 30, 35.

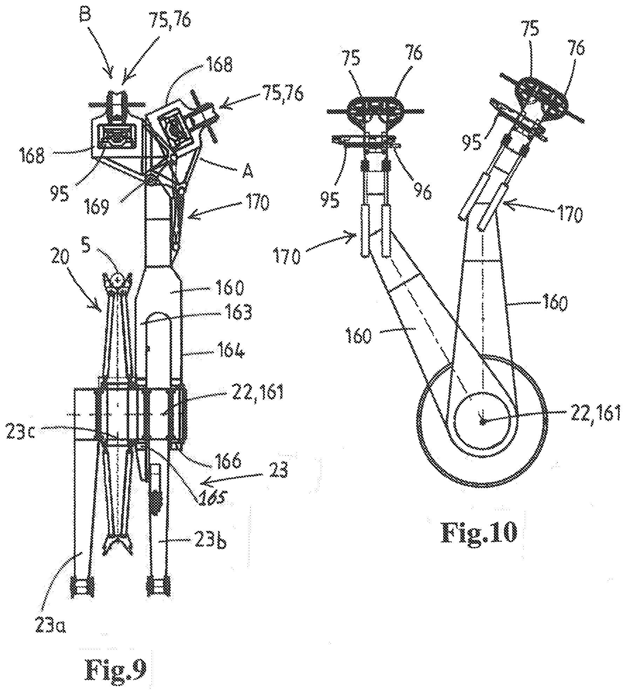

The system further comprises an abandonment and recovery (A&R) system comprising at least one A&R cable 40 and associated A&R winch, here a traction winch 41 and a storage drum winch 42. Further a sheave arrangement is present, here with two A&R sheaves 43, 44, each supported by a respective A&R sheave beam 45, 46 on the launch tower above the tensioners 30, 35. As will be appreciated, and as preferred, each sheave beam 45, 46 is displaceable between a retracted position, where the sheave is remote from the firing line, e.g. to allow the safe passage of an end fitting on a flexible pipeline, and an A&R position and/or other operative position, e.g. aligned with the firing line or in a double fall arrangement when a trolley, as trolley 47, is suspended from a double fall A&R cable arrangement.
As explained in detail in WO2014/120004, in particular with reference to figures 9 - 11 thereof, which is incorporated herein by reference, the launch tower 10 is provided with auxiliary trolley 47 that is adapted to support the weight of the launched pipeline 5 and is suspended from the A&R cable 40, preferably in a double fall arrangement with cables suspended from two A&R sheaves 43, 44.

The trolley 47 is movable along rails fitted to the structural frame of the tower 10 so as to move along the firing line 6, e.g. between an upper position above the uppermost tensioner 35 and a lower position below the lowermost tensioner 30. This motion is possible when the one or more tensioner frames are in their retracted non-operable position.

As is known in the field the pipeline 5 to be laid may be equipped with an end fitting, e.g. a first end connector 5a at the leading end of the pipeline 5 to be laid and/or a second end connector 5b at the trailing end of the pipeline to be laid. The end fittings are depicted here including a connector part and a bending restrictor part. The dimensions schematically represent a large version envisaged in practice.

In order to transfer an end fitting on a flexible pipeline over the pipeline guide 20 the system comprises a flexible pipeline end fitting transfer mechanism. This transfer mechanism comprises a transfer arm 60 which is rotatable about a horizontal transfer arm axis 61, which here coincides with axis 22 of wheel 20. The arm 60 is independently rotatable relative to the wheel 20.

The wheel 20 is non-driven, but it desired a drive may be provided for.

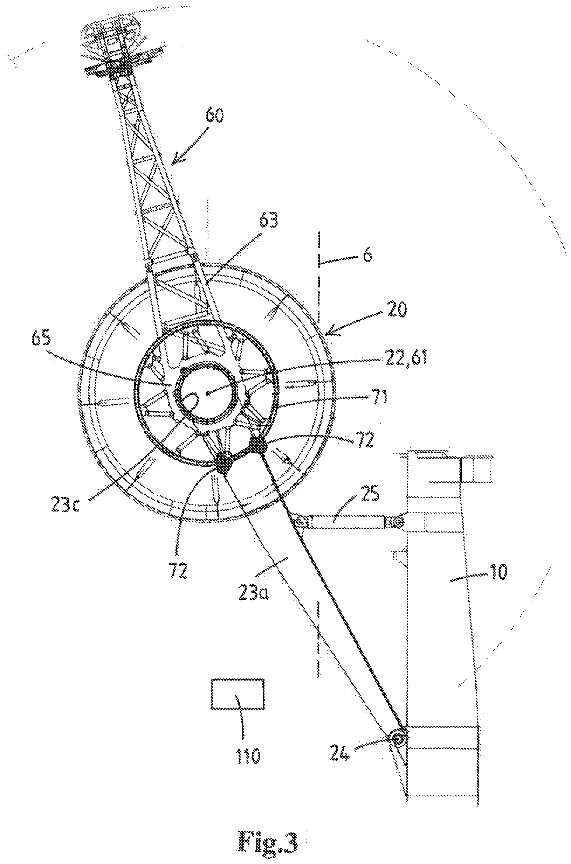

In figure 3 the arm 60 is shown with items like ladders, platforms, that allows for access by personnel removed for reasons of clarity.

As is preferred the arm 60 has a structural frame that straddles the pipeline guide 20. The frame comprises leg portions 63, 64 at opposite sides of the wheel 20, with each leg portion terminating at a hub 65, 66 including a bearing supported on the central portion of the tubular girder 23c that also supports the wheel 20.

Outward of the pipeline guide 20 the structural frame of the arm 60 has one or more frame members that intersect the imaginary vertical plane of the pipeline guide 20. In general this part is here embodied as a latticed structure with four corner columns and braces that extend transverse and diagonally.
The connection between each leg portion and the latticed structure may be a releasable connection, e.g. with pins, allowing, e.g. to remove the latticed structure and the head with the sheave assembly and retainer assembly when not needed for a longer period or for maintenance.

The latticed structure may be modular with multiple sections releasably interconnected as is known for crane booms.

The latticed structure may be telescopic with one section telescoping into another section, e.g. with provision of one or more actuators, e.g. one or more linear actuators, e.g. hydraulic cylinders, to perform the telescoping motion.

The arm 60 is rotatable over at least a full rotation about the axis 22, 61, e.g. over one and a quarter or about one and a half turn, e.g. over 500°. A rotation range of more than one turn yet less than two allows for all end fitting handling operations and e.g. allows for feeding electrical cables and the like to the arm via a drag chain structure that is arranged around the axis 22 between the arm 60 and the support frame 23.

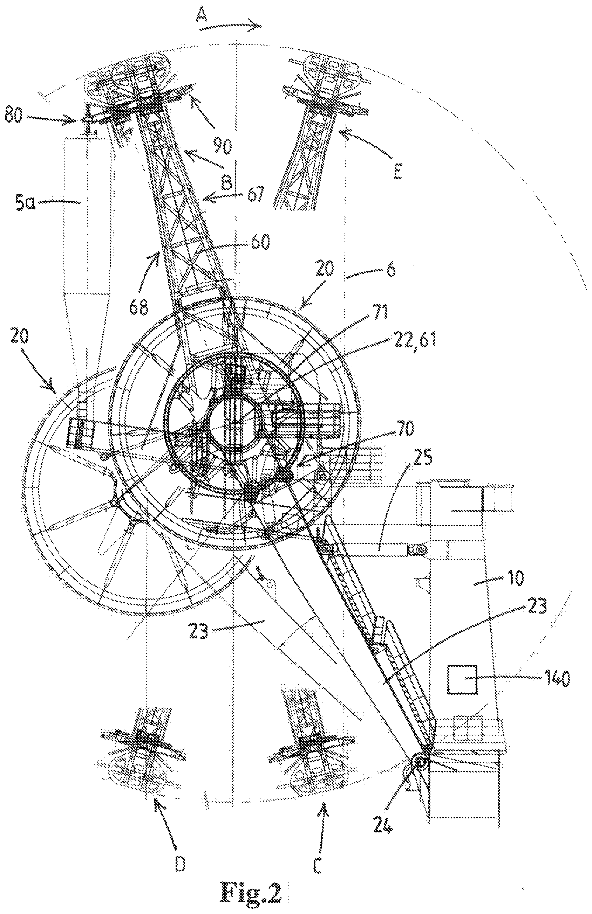

The arm 60 has a leading side 67 and a trailing side 68 when seen in direction of rotation, see arrow A in figure 2, over the top of the pipeline guide 20 towards the firing line 6.

As is preferred a motorized transfer arm drive 70 is provided, which is adapted to provide a driving force to rotate the transfer arm 60 about axis 22. For example the arm 60 is provided with a circular rack 71 about axis 23 and one or more motors 72 driving one or more pinions engaged with the rack. In the embodiment shown, and a rack 71 is mounted at each side of the transfer arm 60 so as to allow for a relatively lightweight structure of the arm 60. Other drives for the arm, e.g. using a chain driven, are also possible.

The transfer arm 60 is provided, radially outward from the pipeline guide surface 21 and at the trailing side 68, with a first retainer 80 for an end fitting adapter 85 that is secured to the first end fitting 5a on a flexible pipeline 5. The first retainer 80 is adapted to retain, at the trailing side of the transfer arm 60, first end fitting 5a provided with this end fitting adapter 85.

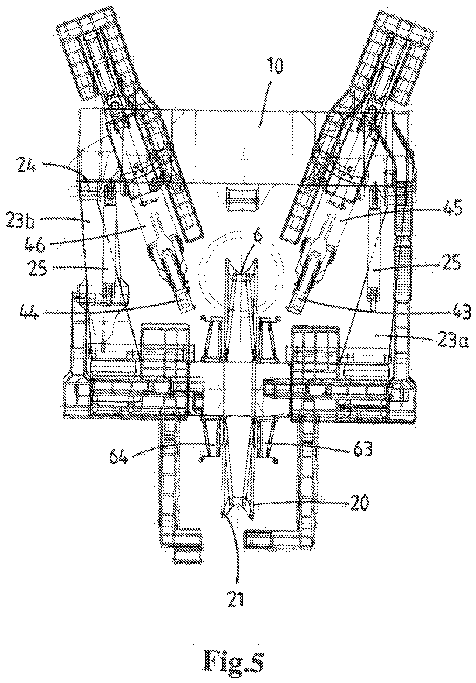

The transfer arm 60 is provided with a first sheave 75 at a position radially outward from the first retainer 80. This first sheave 75 is adapted and arranged to guide a winch driven cable 100 attached via the end fitting adapter 85 to the first end fitting 5a such that, with the transfer arm 60 in a first end fitting pick up orientation thereof (see figures 5a, 5b), the first end fitting is lifted and the end fitting adapter 85 reaches the first retainer 80 allowing for engagement with the first retainer whilst suspended from the cable 100. For example, as is known in the art the cable 100 extends to an initiation winch 101.

The transfer arm 60 is rotatable, with the first end fitting 5a retained by the first retainer 80 (and possibly with the cable 100 maintaining some tension), into a first end fitting release orientation thereof so that the first end fitting passes over and about the arctuate guide surface towards the firing line 6. This will be explained in more detail below.

The transfer arm 60 is also provided, radially outward from the pipeline guide surface and at the leading side, with a second retainer 90 for an end fitting adapter 87 secured to second end fitting 5b on pipeline 5, e.g. via a bolted connection. The second retainer 90 is adapted to retain, at the leading side of the transfer arm, the second end fitting 5b on a flexible pipeline 5.

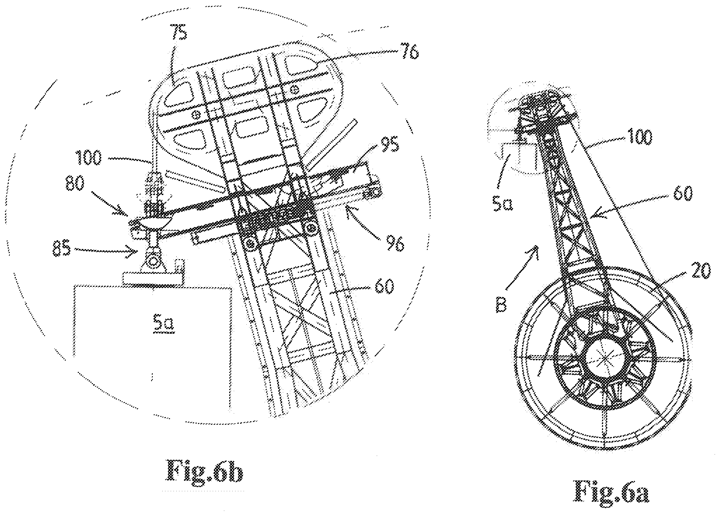

The transfer arm 60 is rotatable into a second end fitting pick up orientation (see figures 6a, b), wherein the end fitting adapter 87 on the second end fitting 5a on a pipeline 5 curving over the arctuate guide surface 21 is engageable with the second retainer 90. The transfer arm 60 is then rotatable into a second end fitting release orientation thereof so that the second end fitting passes over and about the arctuate guide surface 21 towards the firing line 6.

The transfer arm is provided with a second sheave 76 at a position radially outward from the second retainer 90. This second sheave 76 is adapted and arranged to guide a winch driven cable 100 attached via the end fitting adapter 87 to the second end fitting 5b such that, with the transfer arm 60 in a second end fitting release position, the second end fitting 5b can be suspended from cable 100 allowing disengagement of the end fitting adapter 87 from the second retainer 90 and lowering of the second end fitting, e.g. with the weight of the launched pipeline 5 still held by the one or more tensioners 30, 35.

The first and second sheaves 75, 76 are offset from one another in direction of rotation A of the transfer arm 60, with the first sheave 75 at the trailing side 68 and the second sheave 76 at the leading side 67 of the transfer arm 60. As is preferred the first and second sheaves 75, 76 are arranged in a common vertical plane so that the cable 100 can be passed over both sheaves 75, 76 in the desired direction depending on the handling activity to be performed.

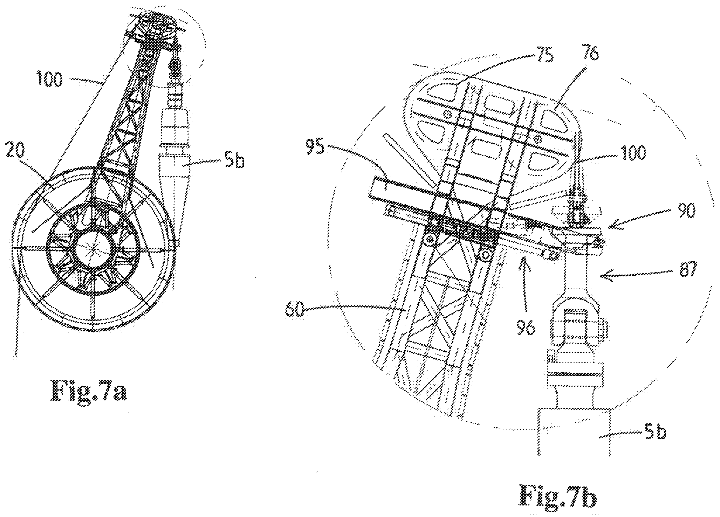

In an embodiment the arm 60 is provided with a single sheave that is displaceable mounted on the arm, e.g. the arm having a pivoting or sliding support bracket for said single sheave, which sheave can be brought in a position corresponding to the first sheave 75 and another position corresponding to the second sheave 76, so generally in a position at the trailing side of the arm and a position at the leading side of the arm.
As can be seen in more detail in figure 7 the first retainer 80 and the second retainer 90 are integrated in a common retainers carrier 95. The retainers carrier 95 is movable supported on the transfer arm 60, here slidable in a direction tangential to the direction of rotation of the transfer arm, by means of one or more hydraulic cylinders 96. In a first position of the common retainers carrier 95 the first retainer 80 is aligned with the first end fitting to be retained and the second retainer 90 is retracted. In the second position of the common retainers carrier 95 the second retainer 90 is aligned with the second end fitting to be retained and the first retainer 80 is retracted.

In an embodiment the one or more retainers 80, 90 and/or the common retainers carrier 95 is movable along the length of the arm 60, so in radial direction, e.g. in order to adjust the radial distance between the retainer and the guide surface for handling of a specific end fitting.

Each retainer 80, 90 comprises a load bearing slotted member 81, 91 having a slot 82, 92 therein. This slot extends in the median vertical plane of the pipeline guide 20. The slot has a mouth at an end of the slot allowing sideways entry of a portion, here a stem, of the end fitting adapter 85, 87 into the slot.

As can be seen, and as preferred, each retainer 80, 90 is further provided with at least one, here two, mobile locking member 83, 93 and associated locking member drive 84, 94 that allows to move the locking member between a non-operative position and a locking position wherein the locking member is positionable in a locking position wherein it blocks the respective slot 82, 92.

It is envisaged, as is preferred, that in use of the transfer mechanism the appropriate retainer 80, 90 carries the end fitting and the pipeline section whereas the cable 100 is relieved from its load and is not employed as weight absorbing means during the passage of the end fitting over and about the guide 20.

As is preferred each retainer 80, 90 comprises a spherical seat. The end fitting adapter 85, 87 comprises a mating spherical portion that can rest on the seat of the retainer 80, 90 and a stem below the spherical seat so as to transmit tensile force to the retainer and so as to create a gimballing support for the end fitting adapter allowing for variation of angular orientation of the stem of the end fitting adapter relative to the retainer.

In an embodiment the stem of the end fitting adapter 87 associated with the second end fitting 5b has a larger diameter, e.g. at least twice as large, than the stem of the end fitting adapter 85 associated with the first retainer 5a. This difference is due to the different load capacity requirements that may be attributed to each adapter, with the second end fitting adapter 87 e.g. being designed to support the weight of the entire seagoing pipeline, e.g. at the moment of lowering the pipeline by means of trolley 47 and/or in an abandonment procedure.

The system comprises a control unit 110 that is linked to the adjuster device 25 and to the transfer arm drive with motors 72. As is preferred this control unit 110 is programmed, e.g. a computerized control unit, to have or establish a second end fitting clearance mode wherein, with the transfer arm 60 in second end fitting release orientation (see figure 7a) with the second end fitting suspended from the cable 100, released from the retainer 90, and aligned with the firing line 6, the adjuster device 25 is operated to pivot the support frame 23 and thereby move the pipeline guide 20 away from the firing line 6 whilst simultaneously the transfer arm 60 is rotated by the transfer arm drive 70, 71, 72 so as to maintain the second end connector 5b aligned with the firing line 6, at least until the pipeline guide 20 has been cleared sufficiently from the firing line 6 to allow for the subsequent lowering of the suspended second end fitting 5a in the firing line 6 without interfering with the pipeline guide 20. During this lowering the pipeline 5 is still held and controlled by the tensioners 30, 35.

The lowering here is done till the adapter 87 has been lowered to a position above the upper most tensioner, at a height where the auxiliary trolley 47 can engage on the adapter 87, so that the cable 100 can be disconnected.

The trolley 47 is provided with a retainer, e.g. a clamp, adapted to engage on the end fitting adapter 87 on a second end fitting 5b that is suspended via the winch driven cable 100 in the firing line 6.

As the trolley 47 has a hoisting capacity similar to the A&R capacity for abandonment and retrieval of pipeline from the seafloor, the securing of the end fitting to the trolley 47 allows for the tensioners 30, 35 to be opened and retracted, thereby allowing the trolley 47 and the end fitting 5b held thereby to be lowered in controlled manner along the tower 10, to a position below the tensioners 30, 35. A hang-off clamp 8 on the vessel may then be employed to engage with the end fitting or an end fitting adapter in order to suspended the pipeline 5 therefrom. The trolley 47 can then be disconnected from the pipeline.

The system also comprises a back tension sheave 120 that is to be mounted, e.g. temporarily, on a deck of the vessel, generally below the side of the pipeline guide that is remote from the firing line 6. This back tension sheave 120, in the transfer of a second end fitting 5b, guides the winch driven cable 100 between a winch, e.g. winch 101 and the end fitting, and allows to apply back tension during this transfer. This allows to avoid that the second end fitting 5b will sway in undue manner as it is raised towards the guide 20.

The transfer arm 60 is, as is preferred, provided with a force sensor 130 adapted to measure the force exerted by the second end fitting 5b on the retainer 90, at least during rotation of the transfer arm 60 from the second end fitting pick up orientation (at D in figure 1) to the second end fitting release orientation (at E in figure 1).

The system comprises a monitoring and control unit 140 connected to the force sensor 130 and to the one or more tensioners 30, 35, in particular to the control of the speed of the track drive motors of the tensioners 30, 35. The monitoring and control unit 140 is adapted, e.g. programmed in a computerized monitoring and control unit 140, to compare the measured force with a predetermined allowable force range and to control the rotation of the transfer arm 60 by means of drive 70, 71, 72 and to control the speed of the one or more tensioners 30, 35 so as to maintain the force within the predetermined allowable force range. This avoids any undue load on the pipeline 5 and fitting 5b.

It will be appreciated that with the transfer arm 60 in the first end fitting pick up orientation thereof (at B in figure 1 and 6) a first end fitting 5a on a flexible pipeline 5 and provided with an end fitting adapter 85 can be lifted by means of cable 100 and winch 101 so that the end fitting adapter 85 reaches the first retainer 80 allowing for engagement with the first retainer 80 whilst suspended from the cable 100. The engagement involves sliding the carrier 95 from a retracted position into an operative position, so that the stem of the adapter passes into the slot 82. The members 83 are then brought in their locked position. Subsequently the weight of the pipeline and end fitting can be transferred on the retainer 80 and carrier 95.

Then the transfer arm 60, with the first end fitting 5a retained by the first retainer 80, is rotated into the first end fitting release orientation (at C in figure 2) thereof so that the first end fitting 5a passes over and about the arctuate guide surface 21 towards the firing line 6. The first adapter 5a is now in upside down orientation in the firing line. Suitable tension can now again be placed on cable 100, allowing to relief the load from the retainer 80 and there after the release and retraction of the retainer 80. Then the cable 100 and winch 101 are operated to pull the fitting 5a and pipeline 5 along the firing line 6 through the tensioners 35, 30 downwards. Subsequently the tensioners 30, 35 can be made to engage on the pipeline 5 and the cable 100 can be disconnected. Then regular pipelaying can be performed with the pipeline being unspooled from reel 3 and passing over wheel 20 into the firing line 6. The arm 60 can be brought in a parking position P shown in figure 1.

Handling of a second end fitting 5b on pipeline 5 will preferably start with the arm 60 in said parking position. The end fitting 5b, entrained by the pipeline 5, is lifted upward to the wheel 20 as the tensioners 30, 35 operate at a low speed, e.g. at a creep speed. In order to avoid swaying of the end fitting 5b it is envisaged that a cable 100 is now passed along a back tension sheave 120, e.g. on deck of the vessel, and is used to apply back tension during said upward lift. For example a constant back tension is applied during the lifting of the second end fitting 5b towards the guide 20. Once the end fitting adapter 87 has reached an appropriate position the transfer arm 60 is rotated into second end fitting pick up orientation (at D in figure 2).

It is envisaged that one or more cameras are present on the arm 60 allowing to view the retainers 80, 90 from a remote operator position in order to monitor their engagement with the adapters 85, 87.

The retainer 90 is then engaged with the adapter 87, here by sliding the carrier 95 to this second operative position, e.g. from a central retracted position, wherein the stem of the adapter 87 enters the slot 92 after which the lock members 93 are brought in their locked position. The end fitting 5b is now secured at the leading side of the arm 60.

The transfer arm 60 is then rotated into second end fitting release orientation (at E) thereof so that the second end fitting 5b is passed over and about the arctuate guide surface 21 towards the firing line.

In an embodiment the drive motors 72 have a torque limitation control so that the pipeline is not subjected to undue tensile load. In addition and/or alternative the described force monitoring can be employed.

In order to relieve the retainer 90 from the load it is envisaged that the tensioners 30, 35 are operated in haul-in mode. Once the load is relieved from the retainer 90, the retainer 90 can be disengaged and retracted.

As explained above the lowering of the end fitting 5b from this position, in order to clear the wheel 20, involves a simultaneous tilting of the frame 23 and further rotation of the arm so that the pipeline and fitting 5b remain aligned with the firing line 6.
Once the desired clearance is reached the cable 100 is paid out and the tensioners 30, 35 operated to pay out some pipeline 5. In order to create space for the fitting 5b the upper centralizer is retracted. The pipeline 5 and fitting 5b are so lowered until the adapter 87 can be engaged by the clamp on trolley 47 as is known from the mentioned prior art. The clamp is then engaged with said adapter 87 and the trolley 47 can then be raised so that the tension is relieved from upper tensioner 35. Then this tensioner 35 can be opened and retracted. Subsequently the trolley 47 is used to relieve the tension from lower tensioner 30, which can then be opened and retracted. Then the trolley 47 is lowered in order to lower the fitting 5b and pipeline 5.

It will be appreciated that, if needed, the system may also be operated to move an end fitting from the firing line over and about the guide towards the storage reel or deck of the vessel, e.g. in a pipeline or riser retrieval operation.

When handling an end fitting use may be made of one or more auxiliary end fitting supports that provide support for the end fitting at one or more intermediate locations along the length of the end fitting. This is for example envisaged when handling delicate and/or heavy end fittings. The one or more auxiliary end fitting supports, e.g. embodied as support brackets, may be secured on the transfer arm prior to engagement thereof with the end fitting or may be fitted to the end fitting first, e.g. on deck, and then secured to transfer arm, e.g. after engagement of the respective retainer with the end fitting or end fitting adapter. In another embodiment the arm is provided with one or more mobile auxiliary end fitting supports, e.g. one or more extensible and retractable end fitting support brackets at one or more intermediate positions along the length of the transfer arm.

With reference to figures 9, 10, and 11 an alternative embodiment and alternative details of a pipeline guide wheel and associated transfer arm mechanism will be briefly described. In the figures components having the same structure and/or function as the components discussed above have been denoted with the same reference numerals.

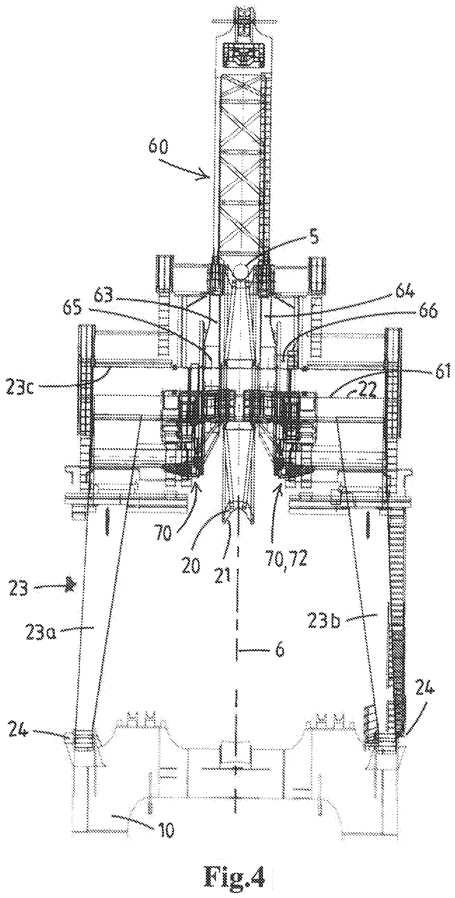

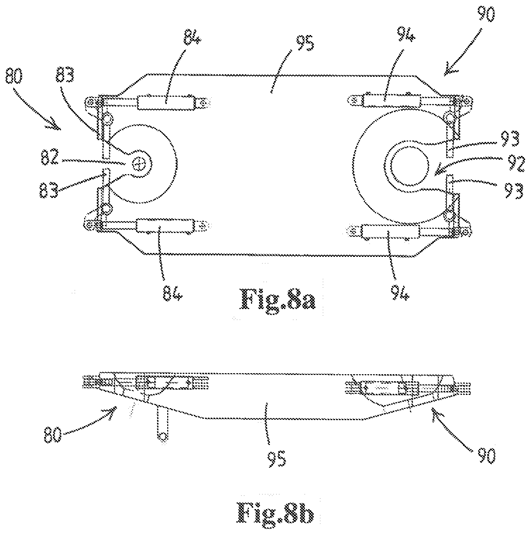

A difference with the system discussed with reference to figures 1 - 8 is that the transfer arm 160 does not have leg portions on opposite sides of the guide wheel 20. Instead the transfer arm 160 is arranged at one side of the guide wheel 20, so in a side-by-side arrangement with the guide wheel 20 and not straddling the guide wheel 20 by leg portions on opposite side of the wheel 20.

The transfer arm 160 is rotatably held at the inner end thereof and further comprises at the outer or free end thereof a movable transfer arm member 168 that supports at least one retainer 80,90 and/or at least one sheave 75, 76. The arm member 168 is movable between a clearing position (at A in figure 9), wherein the member 168 and components supported thereon are away from a vertical plane through the guide wheel 20 and an operative position (at B in figure 9), wherein said at least one retainer 80, 90 and/or at least one sheave 75, 76 are in said plane in order to allow said components to perform the respective task in the process of handling an end fitting on a pipeline.

As depicted here the movable transfer arm member 168 can be hinged about hinge axis 169 relative to the other part of the arm 160.

One or more actuators, here a pair of hydraulic cylinders 170, are provided on the arm 160 to cause the movable transfer arm member 168 to be moved between the clearing and operative position.

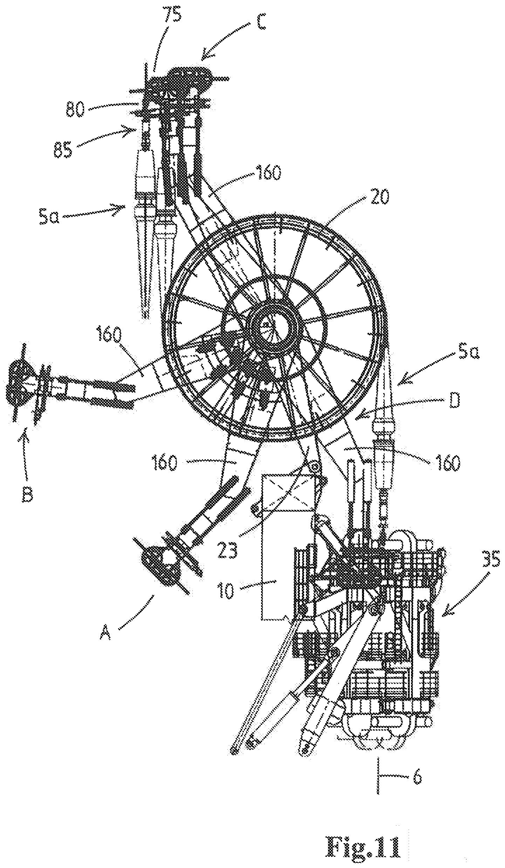

In figure 11 the transfer arm 160 is illustrated in a rest or parking position at A. As can be seen the arm 160 is generally extending downwardly, here rather close to the structure of the tower 10.

With the arm 160 rotated away from the parking position A and brought and held in position B, e.g. by a non-depicted drive for the arm 160, a winch driven cable can be passed, or has already been passed, over the sheaves 75, 76, e.g. from an initiation winch wherein the cable then also passes over the rim of the guide wheel 20 and then along the other side of the tower, e.g. into firing line 6.

Then this cable can be used to connect to a first end fitting 5a, e.g. to an end fitting adapter 85, and then used to lift the pipeline 5 with said fitting 5a and possible adapter 85 to the level of the arm 160. As is preferred the adapter 85 is engaged by retainer 80 as discussed above.

Then further rotation of the arm 160 towards the firing line 6 causes the end fitting 5a and/or the pipeline near the end fitting 5a to engage the guide wheel 20 as depicted by the two positions of the arm 160 at C in figure 11.

Continued rotation of the arm 160 towards the firing line 6 causes the end fitting 5a to be passed over and about the guide wheel 20. The wheel 20 may also rotate in the process, possibly the wheel 20 being driven by a drive motor.
The arm 160 is rotated until the end fitting 5a becomes vertically suspended from the guide wheel 20 in the firing line 6. The tensioner 35 may have been in retracted position within the tower 10 during this part of the handling process and advanced into the depicted active position along the firing line 6 at a later stage (which active position is illustrated in figure 11).

Then the end fitting 5a and/or adapter 85 can be released from the arm 160.

A further aspect of the transfer arm 160 depicted in figures 9 - 11 is that the arm 160 is unable to perform a full revolution about its horizontal axis 161 as this would interfere with the support frame 23 and/or the tower 10. So figure 11 illustrates at D the position of the arm 160 beyond which the arm 160 cannot further continue to be rotated. In order to return the arm 160 in counter rotation towards its parking position A, opposite from the firing line 6 relative to the tower 10, first the transfer arm member 168 is moved into its non-operative clearing position. This allows said member 168 and components supported thereby to move past the end fitting 5a that has become suspended from the guide wheel 20 and later past the pipeline 5 itself when the arm is then rotated in counter rotation.

An aspect of the transfer arm depicted in figures 9 - 11 is that the arm 160 has two fork leg portions 163, 164 that each have a hub 165, 166 at their inner end to rotatably connect the arm 160 to the frame 23. The frame 23 has a leg 23b with a top end in between the hubs 165, 166. Thereby one hub 165 and the wheel 20 are supported on a girder 23c between the legs 23a, b of the frame 23. The other hub 166 is supported on an extension of the girder 23c outside of the leg 23b. This design allows for relatively close spacing of the legs 23a, b, whilst still providing a stable connection for the arm 160 to the frame 23. It will be appreciated that such design is favourable in combination with the described movable transfer arm member 168 in order to allow to and fro motion of the transfer arm between a parking position on one side of the tower 10 and a position wherein a first end fitting 5a on a pipeline 5 is brought into the firing line 6 at the opposite side of the tower 10.

It will be appreciated that the arm 160, e.g. when provided with common retainer member 95 as depicted here, is equally suitable to handle a second end fitting on a pipeline in a manner similar to the one described with reference to figures 7a, 7b.

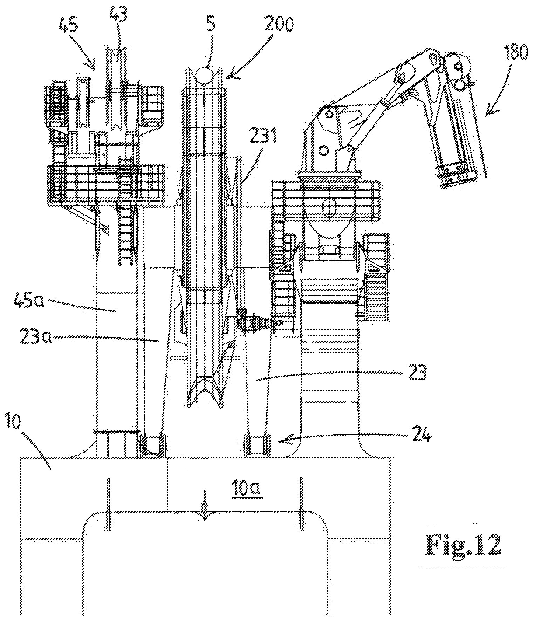

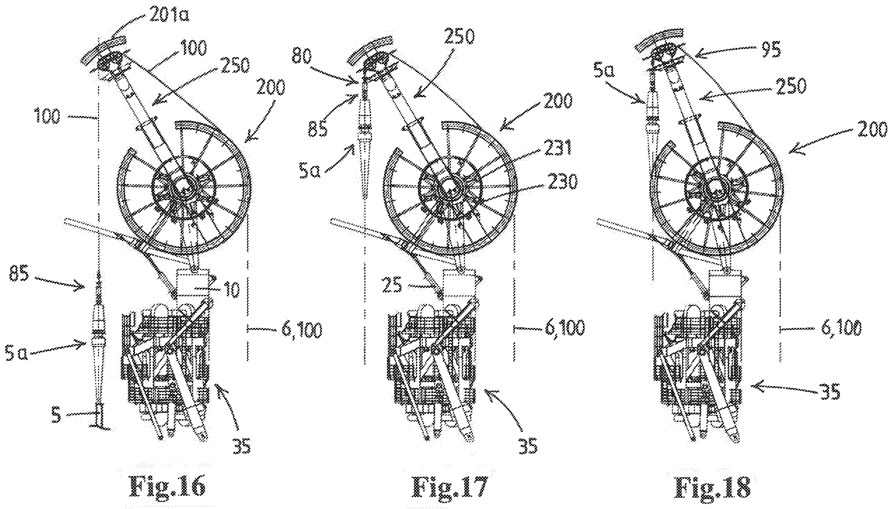

With reference to figures 12 - 15 a system will be elucidated. Figures 16 - 20 serve to demonstrate how the system can be operated for handling a first end fitting on a pipeline.

The upper part of the launch tower 10, here a top transverse beam 10a of the tower 10 directly above the uppermost tensioner 35, supports a pipeline guide wheel support frame 23 that is pivotally connected to the tower 10 about a horizontal support frame pivot axis 24. Figure 12 further depicts the presence of an A&R sheave 43 on an A&R sheave beam 45 supported on a vertical A&R sheave beam post 45a. This post 45a is fitted on the top beam 10a at one side of the frame 23.

On the other side of the frame 12 the figure 12 depicts the presence of an auxiliary crane 180, also supported here on the top beam 10a.

Here the frame 23 comprises two spaced apart main legs 23a, b, the spacing between the main legs being dimensioned to accommodate the guide wheel 200 with the integrated extendable transfer arm 250.

Each leg 23a, b has a lower end that is pivotally connected to the launch tower about the horizontal support frame pivot axis 24.

An adjuster device 25 is arranged between the pipeline guide support frame 23 and the launch tower 10 and is adapted to adjust the angular orientation of the support frame 23 and thereby adjust the horizontal distance between the firing line 6 and pipeline guide wheel 20.

The pipeline guide wheel 200 has a circular pipeline guide surface 201, here as known in the art a circular pipeline gutter. The gutter 201 is supported by a left-hand support structure, here with left-hand spokes 202, that is connected to a left-hand bearing arrangement of the pipeline guide wheel 201. The gutter 201 is also supported by a right-hand support structure, here with right-hand spokes 204, that is connected to a right-hand bearing arrangement of the pipeline guide wheel 201.

A gap 209 is present between the left-hand and right-hand bearing arrangements, here trunnions 205, 206, and a vertical plane through the wheel 200 intersects this gap 209.

Each bearing arrangement of the guide wheel 200 comprises a trunnion 205, 206 that protrudes outwardly from the respective support structure 202, 204. Each of the trunnions 205, 206 is mounted via one or more bearings 207, 208 on the frame 23, here on the respective main leg 23a, b thereof, that supports the guide wheel 200. Here each trunnion is mounted via two spaced apart bearings to absorb torsional loads and enhance stability of the system which is somehow impaired by the presence of the gap when compared to, for example, a design wherein the guide wheel is rotatably mounted on a continuous shaft or a girder as described herein.

The pipeline guide wheel 200 is thus mounted at an elevated position of the launch tower 10 and provides a circular guide surface 201 in a vertical plane for guiding a pipeline 5 from a storage reel into the firing line 6. The wheel 200 is rotatable about a horizontal guide wheel axis 222.

The gap 209 is created to facilitate the accommodation or integration of an extendable transfer arm 250 in the guide wheel 200. Basically the gap 209 allows for the structure of the extendable transfer arm 250 to extend through the gap.

The extendable transfer arm 250 is connected to the pipeline guide wheel 200 so as to rotate in unison with the pipeline guide wheel 200. Figure 12 illustrates the presence of at least one drive motor 230 to impart controlled rotary motion to the ensemble. In this example it is envisaged that a circular toothed rack 231 is secured to one side of the guide wheel 200 and extends around the respective trunnion 206, e.g. via a dedicated spoke structure. One or more drive motors, here four motors, drive one or more pinions 232 that mesh with the rack 231.

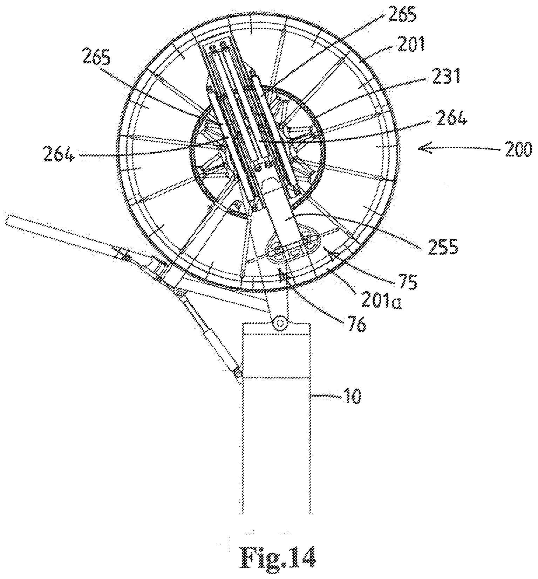

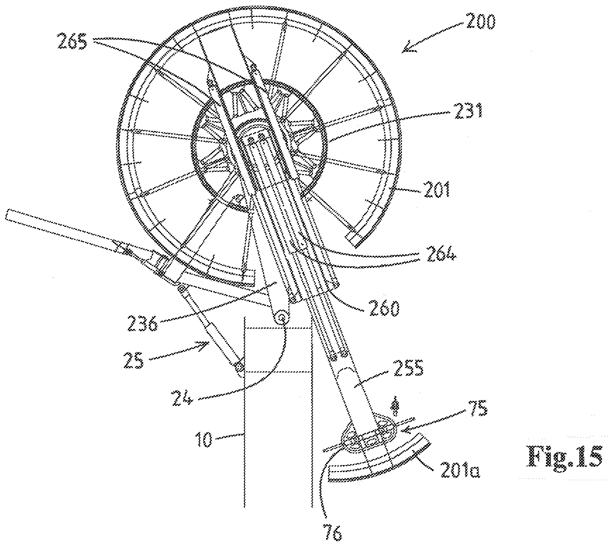

As the skilled person will easily infer from the figures 14, 15 this embodiment envisages a telescopically extendable transfer arm 250, with figure 14 depicting the non-operative retracted position and figure 15 depicting the operative extended position of the arm 250.

The exemplary transfer arm 250 is a two stage, telescopically extendable transfer arm.

The arm comprises has an extendable transfer arm frame structure including a movable or telescoping first frame member 255 that in this example supports sheaves 75, 76 and retainers 80, 90, incorporated into common carrier 95, as has been described with reference to the figures 1 - 8. It will be appreciated that instead of providing this specific embodiment of the pipeline end fitting engagement means at the end of the transfer arm 250, other designs thereof are well possible, for example the variants discussed above.

In general the pipeline end fitting engagement means on the extendable, e.g. telescopic, transfer arm 250 could include for example at least one of a retainer 80, 90 for a pipeline end fitting or an end fitting adapter, a cable guide, e.g. a sheave 75,76, for a cable to be connected to a pipeline end fitting or an end fitting adapter, and a winch having a cable to be connected to a pipeline end fitting or an end fitting adapter.

The transfer arm 250 further includes an intermediate or second movable member 260, here telescopically guided relative to the structure of the guide wheel.

One or more first actuators, here hydraulic cylinders 264, are provided between the intermediate member 260 and the first movable member 255, and one or more second actuators, here hydraulic cylinders 265, are provided to extend the intermediate movable member 260 relative to the merely rotating structure of the wheel 200.

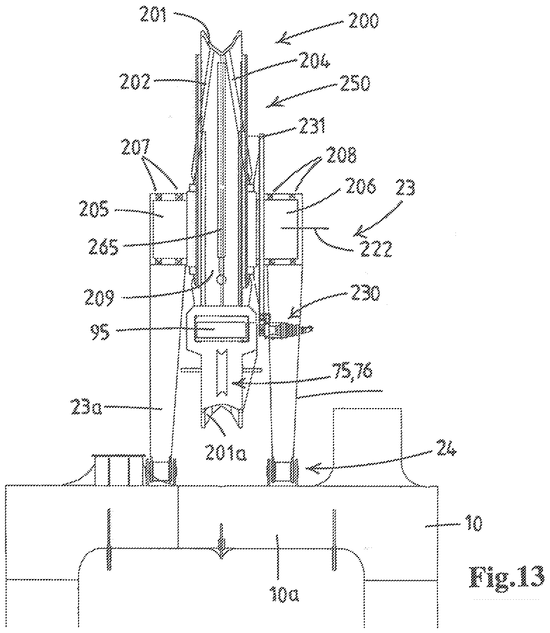

The skilled person will appreciate that the depicted extendable transfer arm 250 extends through the gap 209 as discussed above, which is schematically indicated in figure 13 by the cylinder 265. The same figure 13 also schematically shows the carrier 95 and the sheaves 75, 76. It is noted that carrier 95 has been left out of the figures 14, 15, but is visible in figures 16 - 20.

The figures 14 and 15 illustrate that the movable frame member 255 supporting the pipeline end fitting engagement means 75,76, 80, 90, 95 is movable between a non-operative retracted position, wherein the movable frame member 255 and the supported pipeline end fitting engagement means are located within the radial contour of the circular guide surface 201 of the guide wheel, and an operative extended position, wherein the movable frame member and the pipeline end fitting engagement means are extended radially outward from the circular guide surface.

As can be seen the extendable transfer arm 250 integrated with the guide wheel 200 allows for optimal compactness of the end fitting handling system, as the transfer arm can be brought in an advantageous retracted position. Also, in retracted position, the transfer arm does not form an obstacle beyond the radial contour or circular perimeter of the pipeline guide wheel. It allows for example for a reduced vertical spacing between an uppermost retractable tensioner 35 and the guide wheel 200, as there is no lengthy transfer arm that requires parking space in said area. This can e.g. be seen when comparing figures 1 and 16.

For example the transfer arm 250 can be extended so as to bring the pipeline end fitting engagement means at a radius which is at least 50% greater than the radius of the guide wheel, e.g. about twice the radius of the guide wheel.

Preferably the transfer arm 250 can be extended to a selectable length, wherein the selection of the length is e.g. dependent from the design of the end fitting that has to be handled, e.g. the length of the end fitting.

It will be appreciated that whilst a telescopic design of the transfer arm 250 is highly practical, other extendable designs of the transfer arm may also be envisaged, e.g. a design with pivoting or folding frame members of the structural frame of the transfer arm.

In the depicted embodiment it is envisaged that the gutter 201 has a movable segment 201a that is secured on the outer end of the extendable transfer arm 250 so as to move along with the motions of the transfer arm 250. If desired one or more additional latch devices may be provided to secure the segment 201a when in retracted position, e.g. to complete the circular extension of the gutter in view of strength thereof.

The skilled person will, aided by the preceding description with reference to handling of first and second end fittings on a pipeline as shown in figures 1 - 8, appreciate the illustrations of figures 16 - 20 wherein the handling of a first end fitting 5a on a pipeline 5 is shown.

Figure 16 shows the transfer arm 250 in extended state and in the first end fitting pick up position. The winch driven cable 100 is passed over sheaves 75, 76 and is secured to adapter 85 arranged on the first end fitting 5a. The cable 100 is employed to hoist the end fitting 5a up along the non-firing line side of the tower 100, e.g. the cable 100 being connected to an initiation winch.

The hoisting is continued until the adapter 85 has reached the level of the first retainer 80 as shown in figure 17. Then the carrier 95 can be shifted in order to engage the first retainer 80 thereof with the adapter 85 as shown in figure 18. Ensemble of the wheel and the arm 250 is slightly rotated in order to bring the lower end of the end fitting or the adjacent part of the pipeline against the guide wheel 200 which is also shown in figure 18. As mentioned the details of this procedure are discussed above.

Then the ensemble of the guide wheel 200 and the extended transfer arm 250, with the end fitting retained by the transfer arm at one end and the other end of the end fitting or the adjacent pipeline portion resting against the wheel, is rotated so as to move the end fitting 5a over and about the wheel towards the firing line 6.

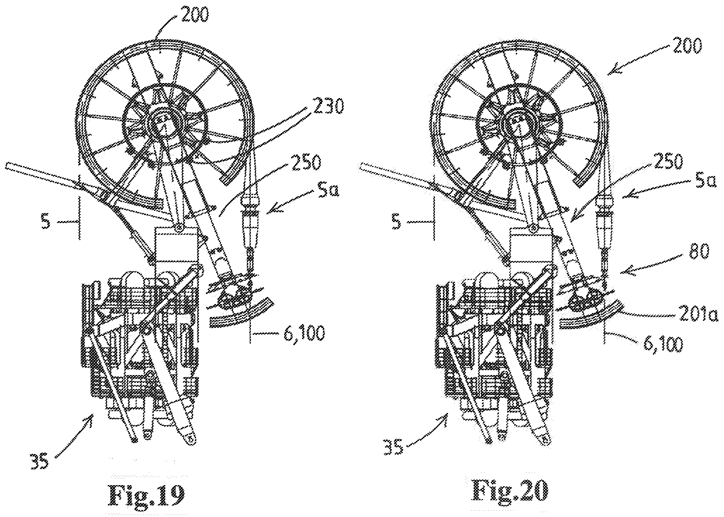

Finally the extended transfer arm 250 reaches the first end fitting release orientation shown in figure 19, where the end fitting 5a is suspended from the guide wheel 200 in the firing line 6.

Then the first retainer 80 is disengaged from the adapter 85 as shown in figure 20. The pipeline is still held by the cable 100 which runs down along the firing line 6 to an initiation winch.

Subsequently the transfer arm 250 is retracted within the guide wheel radial contour. The first end fitting 5a is then pulled down along the firing line and the one or more tensioners 35 are brought into contact with the pipeline for the further pipelaying process.

It will be appreciated that the transfer arm 250 may equally be employed for handling the second end fitting in a manner similar to the one discussed with reference to figures 1- 8.

In order to bring the transfer arm 250 into the second end fitting pick up orientation, with the pipeline resting on the guide wheel 200, it may be necessary the change the orientation of the wheel 200 and arm 250 without moving the pipeline along its length. This may be done by simply allowing for some frictional motion between the guide wheel 200 and the pipeline 5 in this process 7a, b. In another proposal the guide wheel 200 can be provided with some means to reduce friction during this process of bringing the arm 250 in the desired second end fitting pick up orientation. For example one can envisage the provision of retractable rollers in the pipeline guide surface, e.g. in cut-outs made in the gutter 201, so that in retracted state the pipeline rests on the gutter and in deployed state the pipeline mainly rests on the rollers.

In an embodiment the segment 201a is removable, e.g. by means of auxiliary crane 180, in order to allow for motion of the movable frame member between said retracted and extended positions. This approach is less preferred compared to the segment being fitted on the outer end of the extendable arm 250.

In an embodiment one or more latch members are provided, e.g. with corresponding actuators that are remotely operable, to latch the movable or removable segment to the rest of the circular guide surface when the transfer arm is retracted.
For example the segment 201a is secured to the extendable transfer arm 250 at the outer end thereof, so that the segment 201a is moved along with the motion of the transfer arm. In an embodiment the segment is secured to the outer end of the extendable transfer arm via a pivot axis with a corresponding actuator allowing to pivot the segment relative to the arm, e.g. to a position at right angles to the vertical plane through the guide wheel, e.g. in order to avoid any interference of the segment with the handling of the end fitting(s).
For example the segment is a segment of a gutter 201 that accommodates the pipeline 5 when the transfer arm is in retracted position.

## Claims

1. Marine pipeline installation system for laying an offshore pipeline and/or installing a subsea riser, said system comprising:
- a storage reel (3) for storage of the pipeline (5) to be installed,
- a launch tower (10) which is adapted for launching the pipeline in a firing line (6) into the sea,
- a pipeline guide (20) mounted at an elevated position of said launch tower and providing an arctuate guide surface (21) in a vertical plane for guiding said pipeline from the storage reel into the firing line,
- one or more tensioners (30,35) mounted on the launch tower below said pipeline guide (20),
- a flexible pipeline end fitting transfer mechanism adapted to transfer an end fitting on a flexible pipeline over the pipeline guide, which transfer mechanism comprises:
- a transfer arm (60) which is rotatable about a horizontal transfer arm axis (61) and relative to the pipeline guide, which arm has a leading side (67) and a trailing side (68) when seen in direction of rotation over the pipeline guide towards the firing line,
wherein the transfer arm is provided, radially outward from the pipeline guide surface (21) and at the trailing side (68), with a first retainer (80) for an end fitting adapter (85), which first retainer is adapted to retain, at the trailing side of the transfer arm, a first end fitting (5a) on a flexible pipeline (5) that is provided with an end fitting adapter,
wherein the transfer arm is provided with a first sheave (75) at a position radially outward from said first retainer (80), said first sheave being adapted and arranged to guide a winch driven cable (100) attached via the end fitting adapter to the first end fitting such that, with the transfer arm in a first end fitting pick up orientation (B) thereof, the first end fitting (5a) is lifted and the end fitting adapter (85) reaches said first retainer allowing for engagement with said first retainer (80) whilst suspended from said cable,
wherein the transfer arm, with the first end fitting retained by said first retainer (80), is rotatable into a first end fitting release orientation (C) thereof so that the first end fitting passes over and about the arctuate guide surface towards the firing line (6),
**characterized in that**
the transfer arm is provided, radially outward from the pipeline guide surface (21) and at the leading side (67), with a second retainer (90) for an end fitting adapter (87), which second retainer is adapted to retain, at the leading side of the transfer arm, a second end fitting (5b) on a flexible pipeline,
wherein the transfer arm is rotatable into a second end fitting pick up orientation (D), wherein the end fitting adapter (87) on the second end fitting on a pipeline (5) curving over the arctuate guide surface (21) is engageable with said second retainer (90), and wherein the transfer arm is rotatable into a second end fitting release orientation (E) thereof so that the second end fitting (5b) passes over and about the arctuate guide surface (21) towards the firing line,
wherein the transfer arm is provided with a second sheave (76) at a position radially outward from said second retainer (90), said second sheave (76) being adapted and arranged to guide a winch driven cable (100) attached via the end fitting adapter (87) to the second end fitting (5b) such that, with the transfer arm in a second end fitting release position, the second end fitting can be suspended from said cable allowing disengagement of the end fitting adapter from the second retainer and lowering of the second end fitting,
wherein said first and second sheaves (75,76) are offset from one another in direction of rotation of the transfer arm (60), with the first sheave at the trailing side and the second sheave at the leading side of the transfer arm, preferably said first and second sheave being arranged in a common vertical plane.

2. System according to claim 1, wherein the first retainer and the second retainer are integrated in a common retainers carrier (95), wherein the retainers carrier is movable supported in the transfer arm, preferably slidable in a direction tangential to the direction of rotation of the transfer arm, wherein in a first position of said common retainers carrier the first retainer is aligned with the first end fitting to be retained and the second retainer is retracted, and wherein in a second position of said common retainers carrier the second retainer is aligned with the second end fitting to be retainer and the first retainer is retracted.

3. System according to claim 1 or 2, wherein each retainer (80,90) comprises a slotted member having a slot therein extending in said vertical plane and with a mouth at an end of said slot allowing lateral entry of a portion of the end fitting into the slot, preferably each retainer further being provided with a mobile locking member and associated locking member drive that allows to move the locking member between a non-operative position and a locking position wherein the locking member is positionable in a locking position wherein it blocks the slot.

4. System according to any one or more of claims 1 - 3, wherein the retainer comprises a spherical seat, and wherein the end fitting adapter (85,87) comprises a mating spherical portion that can rest on said seat and a stem below said seat so as to transmit tensile force to the retainer and so as to create a pendulum support for the end fitting adapter allowing for variation of angular orientation of the stem of the end fitting adapter relative to the retainer.

5. System according to claim 4, wherein the stem of the end fitting adapter (87) associated with the second end fitting has a larger diameter, e.g. at least twice as large, than the stem of the end fitting adapter associated with the first retainer.

6. System according to any one or more of claims 1 - 5, wherein the pipeline guide is a circular pipeline guide wheel (20) that is rotatable about a horizontal guide wheel axis (22), preferably coinciding with the transfer arm rotation axis (61).

7. System according to any one or more of claims 1 - 6, wherein the pipeline guide (20) and the transfer arm (60) are supported by a support frame (23) that is movably connected to the launch tower at an elevated position of said launch tower, wherein an adjuster device (25) is arranged between the support frame and the launch tower, which adjuster device is adapted to adjust the position of the support frame relative to the launch tower and thereby adjust a horizontal distance between the firing line and pipeline guide.

8. System according to claim 7, wherein the support frame (23) is pivotally connected about a horizontal support frame pivot axis (24) to the launch tower (10) at an elevated position of said launch tower, wherein the adjuster device (25) is arranged between the support frame and the launch tower to adjust the pivotal orientation of the support frame and thereby adjust the horizontal distance between the firing line and pipeline guide.

9. System according to claim 7 or 8, wherein the system comprises a control unit linked to said adjuster device (25) and said transfer arm drive (70,71,72),
and wherein said control unit is programmed to have a second end fitting clearance mode wherein, with the transfer arm in second end fitting release orientation with the second end fitting suspended from the cable, released from the retainer, and aligned with the firing line, the adjuster device is operated to move the support frame and thereby move the pipeline guide away from the firing line whilst simultaneous the transfer arm is rotated by the transfer arm drive so as to maintain the second end connector aligned with the firing line, at least until the pipeline guide has been cleared sufficiently from the firing line to allow for the subsequent lowering of the suspended second end fitting without interfering with the pipeline guide.

10. System according to any one or more of claims 1 - 9, wherein the installation comprises a back tension sheave that is mounted or is to be mounted on a deck of the vessel, generally below the side of the pipeline guide remote from the firing line, said back tension sheave, in the transfer of a second end fitting, guiding said winch driven cable and allowing to apply back tension during said transfer.

11. System according to any one or more of claims 1 - 10, wherein each tensioner (30,35) comprising a tensioner frame and multiple tracks supported by said tensioner frame, said tracks being adapted for engaging the pipeline and supporting at least part of the weight of the launched pipeline, the tensioner frame being supported via an associated support assembly, the support assembly of one or more tensioner frames being adapted to allow for displacement of the tensioner frame with respect to the tower between an active position, wherein the firing line extends through the tensioner frame and between the tracks, so that the tracks can engage on a pipeline, and a retracted non-operable position,
and wherein the launch tower is provided with an auxiliary trolley (47) adapted to support the weight of the launched pipeline and suspended from the A&R cable, which trolley is movable along rails (48) along the firing line when the one or more tensioner frames are in the retracted non-operable position, from a position above the uppermost tensioner to a position below the lowermost tensioner, the rail being supported by the launch tower,
and wherein the trolley is provided with a retainer, e.g. a clamp, adapted to engage on the end fitting adapter (87) on a second end fitting that is suspended via said winch driven cable (100) in the firing line.

12. System according to any one or more of claims 1 - 11, wherein the transfer arm is provided with a force sensor (130) adapted to measure the force exerted by the second end fitting (5b) on the second retainer (90), at least during rotation of the transfer arm from the second end fitting pick up orientation to the second end fitting release orientation,
and wherein the system comprises a monitoring and control unit (140) connected to said force sensor (130) and to said one or more tensioners (30, 35), the monitoring and control unit being adapted to compare the measured force with a predetermined allowable force range and to control the rotation of the transfer arm and one or more tensioners so as to maintain the force within said predetermined allowable force range.

13. System according to any one or more of claims 1 - 12, wherein the pipeline guide support frame comprises two spaced apart main legs (23a,b), the spacing between said main legs allowing for the passage of the transfer arm between said main legs, each having a lower end pivotally connected to the launch tower about said horizontal support frame pivot axis (24), and wherein the pipeline guide support frame comprises a horizontal tubular girder (23c) that is integrated with the main legs so as to form an inverted U-shape pipeline guide support frame,
wherein the tubular girder (23c) has a diameter of at least 1 metre, e.g. between 1.5 and 2.5 metre,
and wherein the tubular girder (23c) has a central portion between said main legs, said central portion supporting centrally a circular pipeline guide wheel (20) via one or more bearings encircling the tubular girder,
and wherein the transfer arm (60) comprises a structural frame that straddles the pipeline guide and has leg portions (63,64) at opposite sides of the guide wheel, with each leg portion terminating at a hub (65,66) including a bearing encircling the central portion of the tubular girder.

14. A vessel for laying an offshore pipeline provided with a system according to any one or more of claims 1 - 13.

15. A method for laying an offshore pipeline and/or installing a subsea riser, wherein use is made of a system according to any of claims 1 - 13 or a vessel of claim 14.

## Patentansprüche

1. Meerespipeline-Installationssystem zum Legen einer Pipeline auf offener See und/oder Installieren einer Unterseesteigleitung, wobei das System umfasst:
- eine Lagerspule (3) zum Lagern einer zu installierenden Pipeline (5),
- einen Ablaufturm (10), welcher zum Ablaufenlassen der Pipeline in einer Schusslinie (6) in das Meer ausgestaltet ist,
- eine Pipelineführung (20), welche an einer erhöhten Position von dem Ablaufturm angebracht ist und eine bogenförmige Gleitfläche (21) in einer vertikalen Ebene zum Führen der Pipeline von der Lagerspule in die Schusslinie bereitstellt,
- eine oder mehrere Spannvorrichtungen (30, 35), welche an dem Ablaufturm unterhalb der Pipelineführung (20) angebracht sind,
- einen Übertragungsmechanismus für einen Endanschlussstück an eine flexible Pipeline, welcher ausgestaltet ist, ein Endanschlussstück an eine flexible Pipeline über der Pipelineführung zu übertragen, wobei der Übertragungsmechanismus umfasst:
- einen Übertragungsarm (60), welcher um eine horizontale Übertragungsarmachse (61) und relativ zu der Pipelineführung drehbar ist, wobei der Arm eine vordere Seite (67) und eine hintere Seite (68) betrachtet in einer Drehrichtung über die Pipelineführung in Richtung der Schusslinie aufweist,
wobei der Übertragungsarm radial nach außen von der Pipelineführungsfläche (21) und der hinteren Seite (68) mit einem ersten Halter (80) für einen Endanschlussstückadapter (85) versehen ist, wobei der erste Halter ausgestaltet ist, an der hinteren Seite des Übertragungsarms ein erstes Endanschlussstück (5a) an einer flexiblen Pipeline (5), welche mit einem Endanschlussstückadapter versehen ist, zu halten,
wobei der Übertragungsarm mit einer ersten Rolle (75) an einer Position radial nach außen von dem ersten Halter (80) versehen ist, wobei die erste Rolle ausgestaltet und eingerichtet ist, ein windenangetriebenes Kabel (100), welches über den Endanschlussstückadapter an dem ersten Endanschlussstück angebracht ist, derart zu führen, dass, mit dem Übertragungsarm in einer ersten Endanschlussstück-Aufnahmeausrichtung (B) davon, das erste Endanschlussstück (5a) angehoben wird und der Endanschlussstückadapter (85) den ersten Halter erreicht, was ein Ineingriffbringen mit dem ersten Halter (80) ermöglicht, während er von dem Kabel herabhängt,
wobei der Übertragungsarm mit dem von dem ersten Halter (80) gehaltenen ersten Endanschlussstück in eine erste Endanschlussstück-Freigabeausrichtung (C) davon drehbar ist, so dass das erste Endanschlussstück über und um die bogenförmige Führungsfläche in Richtung der Schusslinie (6) verläuft,
**dadurch gekennzeichnet, dass**
der Übertragungsarm radial nach außen von der Pipelineführungsfläche (21) und an der führenden Seite (67) mit einem zweiten Halter (90) für einen Endanschlussstückadapter (87) versehen ist, wobei der zweite Halter ausgestaltet ist, an der vorderen Seite von dem Übertragungsarm ein zweites Endanschlussstück (5b) an einer flexiblen Pipeline zu halten,
wobei der Übertragungsarm in eine zweite Endanschlussstück-Aufnahmeausrichtung (D) drehbar ist, wobei der Endanschlussstückadapter (87) an dem zweiten Endanschlussstück an einer Pipeline (5), welche sich über die bogenförmige Führungsfläche (21) biegt, mit dem zweiten Halter (90) in Eingriff bringbar ist, und wobei der Übertragungsarm in eine zweite Endanschlussstück-Freigabeausrichtung (E) davon so drehbar ist, dass das zweite Endanschlussstück (5b) über und um die bogenförmige Führungsfläche (21) in Richtung der Schusslinie verläuft,
wobei der Übertragungsarm mit einer zweiten Rolle (76) an einer Position radial nach außen von dem zweiten Halter (90) versehen ist, wobei die zweite Rolle (76) ausgestaltet und eingerichtet ist, ein windenangetriebenes Kabel (100), welches über den Endanschlussstückadapter (87) angebracht ist, zu dem zweiten Endanschlussstück (5b) derart zu führen, dass, mit dem Übertragungsarm in einer zweiten Endanschlussstück-Freigabeposition, das zweite Endanschlussstück von dem Kabel herunterhängen kann, was ein Entkoppeln des Endanschlussstückadapters von dem zweiten Halter und ein Absenken des zweiten Endanschlussstücks ermöglicht,
wobei die erste und zweite Rolle (75, 76) versetzt zueinander in Richtung einer Drehung des Übertragungsarms (60) mit der ersten Rolle an der vorderen Seite und der zweiten Rolle an der hinteren Seite des Übertragungsarms sind, wobei die erste und zweite Rolle vorzugsweise in einer gemeinsamen vertikalen Ebene angeordnet sind.

2. System nach Anspruch 1, wobei der erste Halter und der zweite Halter in einem gemeinsamen Halterträger (95) ausgebildet sind, wobei der Halterträger beweglich in dem Übertragungsarm gehalten wird, vorzugsweise verschiebbar in einer Richtung tangential zu der Richtung einer Drehung des Übertragungsarms, wobei in einer ersten Position des gemeinsamen Halterträgers der erste Halter zu dem zu haltenden ersten Endanschlussstück ausgerichtet ist und der zweite Halter zurückgezogen ist, und wobei in einer zweiten Position des gemeinsamen Halterträgers der zweite Halter zu dem zu haltenden zweiten Endanschlussstück ausgerichtet ist und der erste Halter zurückgezogen ist.

3. System nach Anspruch 1 oder 2, wobei jeder Halter (80, 90) ein geschlitztes Element umfasst, aufweisend einen Schlitz, welcher sich darin in der vertikalen Ebene erstreckt, und mit einer Öffnung an einem Ende von dem Schlitz, welche einen seitlichen Eintritt eines Abschnitts des Endanschlussstücks in den Schlitz ermöglicht, wobei vorzugsweise jeder Halter ferner mit einem beweglichen Verriegelungselement und einem zugeordneten Verriegelungselementantrieb versehen ist, welcher ermöglicht, das Verriegelungselement zwischen einer Nicht-Betriebsposition und einer Verriegelungsposition zu bewegen, wobei das Verriegelungselement in einer Verriegelungsposition positionierbar ist, in welcher es den Schlitz blockiert.

4. System nach einem oder mehreren der Ansprüche 1 bis 3, wobei der Halter einen sphärischen Sitz umfasst, und wobei der Endanschlussstückadapter (85, 87) einen passenden sphärischen Abschnitt, welcher auf dem Sitz ruhen kann, und einen Schaft unterhalb des Sitzes umfasst, um eine Zugkraft auf den Halter zu übertragen und um eine Pendelhalterung für den Endanschlussstückadapter zu erzeugen, welche eine Veränderung einer winkeligen Ausrichtung des Schafts des Endanschlussstückadapters relativ zu dem Halter ermöglicht.

5. System nach Anspruch 4, wobei der Schaft von dem Endanschlussstückadapter (87), welcher dem zweiten Endanschlussstück zugeordnet ist, einen größeren Durchmesser, zum Beispiel mindestens einen doppelt so großen, als der Schaft des Endanschlussstückadapters, welcher dem ersten Halter zugeordnet ist, aufweist.

6. System nach einem oder mehreren der Ansprüche 1 bis 5, wobei die Pipelineführung ein kreisförmiges Pipelineführungsrad (20) ist, welches drehbar um eine horizontale Führungsradachse (22) ist, welche vorzugsweise mit der Übertragungsarmdrehachse (61) zusammenfällt.

7. System nach einem oder mehreren der Ansprüche 1 bis 6, wobei die Pipelineführung (20) und der Übertragungsarm (60) von einem Halterahmen (23) gehalten werden, welcher beweglich mit dem Ablaufturm an einer erhöhten Position des Ablaufturms verbunden ist, wobei eine Einstellvorrichtung (25) zwischen dem Halterahmen und dem Ablaufturm angeordnet ist, wobei die Einstellvorrichtung ausgestaltet ist, die Position des Halterahmens relativ zu dem Ablaufturm einzustellen und dadurch einen horizontalen Abstand zwischen der Schusslinie und der Pipelineführung einzustellen.

8. System nach Anspruch 7, wobei der Halterahmen (23) drehbar um eine horizontale Halterahmendrehachse (24) mit dem Ablaufturm (10) an einer erhöhten Position des Ablaufturms verbunden ist, wobei die Einstellvorrichtung (25) zwischen dem Halterahmen und dem Ablaufturm angeordnet ist, um die Drehausrichtung des Halterahmens einzustellen und dadurch den horizontalen Abstand zwischen der Schusslinie und der Pipelineführung einzustellen.

9. System nach Anspruch 7 oder 8, wobei das System eine Steuereinheit umfasst, welche mit der Einstellvorrichtung (25) und dem Übertragungsarmantrieb (70, 71, 72) verbunden ist,
und wobei die Steuereinheit programmiert ist, eine zweite Endanschlussstück-Freiraumbetriebsart aufzuweisen, wobei, mit dem Übertragungsarm in einer zweiten Endanschlussstück-Freigabeausrichtung mit dem zweiten Endanschlussstück herabhängend von dem Kabel, freigegeben von dem Halter und ausgerichtet zu der Schusslinie, die Einstellvorrichtung ausgestaltet ist, den Halterahmen zu bewegen und dadurch die Pipelineführung weg von der Schusslinie zu bewegen, während gleichzeitig der Übertragungsarm von dem Übertragungsarmantrieb gedreht wird, um den zweiten Endverbinder ausgerichtet zu der Schusslinie zu halten, zumindest bis die Pipelineführung ausreichend von der Schusslinie freigemacht wurde, um das nachfolgende Absenken des herabhängenden zweiten Endanschlussstücks zu ermöglichen, ohne die Pipelineführung störend zu beeinflussen.

10. System nach einem oder mehreren der Ansprüche 1 bis 9, wobei die Installation eine Rückspannrolle umfasst, welche an einem Deck des Wasserfahrzeugs im Wesentlichen unterhalb der Seite von der Pipelineführung entfernt von der Schusslinie angebracht ist oder anzubringen ist, wobei die Rückspannrolle bei dem Übertragen eines zweiten Endanschlussstücks das windenangetriebene Kabel führt und ermöglicht, während der Übertragung eine Rückspannung auszuüben.

11. System nach einem oder mehreren der Ansprüche 1 bis 10, wobei jede Spannvorrichtung (30, 35) einen Spannrahmen und mehrere von dem Spannrahmen gehaltene Ketten umfasst, wobei jede Kette ausgestaltet ist um mit der Pipeline in Eingriff zu bringen und zumindest ein Teil des Gewichts der abgelaufenen Pipeline zu halten, wobei der Spannrahmen über eine zugeordnete Halteranordnung gehalten wird, wobei die Halteranordnung von einem oder mehreren Spannrahmen ausgestaltet ist, ein Versetzen von dem Spannrahmen bezogen auf den Turm zwischen einer aktiven Position, in welcher sich die Schusslinie durch den Spannrahmen und zwischen den Ketten erstreckt, so dass die Ketten mit einer Pipeline in Eingriff gebracht werden können, und einer zurückgezogenen Nicht-Betriebsposition zu ermöglichen,
und wobei der Ablaufturm mit einem Hilfswagen (47) versehen ist, welcher ausgestaltet ist, das Gewicht der abgelaufenen Pipeline zu halten, und von dem A&R-Kabel herabhängt, wobei der Wagen entlang Schienen (48) entlang der Schusslinie, wenn der eine oder die mehreren Spannrahmen in der zurückgezogenen Nicht-Betriebsposition sind, von einer Position über der obersten Spannvorrichtung zu einer Position unter der untersten Spannvorrichtung beweglich ist, wobei die Schiene von dem Ablaufturm gehalten wird,
und wobei der Wagen mit einer Haltevorrichtung, zum Beispiel einer Klemme, versehen ist, welche ausgestaltet ist, mit dem Endanschlussstückadapter (87) an einem zweiten Endanschlussstück, welches über das windenangetriebene Kabel (100) in der Schusslinie herabhängt, in Eingriff gebracht zu werden.

12. System nach einem oder mehreren der Ansprüche 1 bis 11, wobei der Übertragungsarm mit einem Kraftsensor (130) versehen ist, welcher ausgestaltet ist, die Kraft, welche von dem zweiten Endanschlussstück (5b) auf dem zweiten Halter (90) ausgeübt wird, zumindest während einer Drehung des Übertragungsarms von der zweiten Endanschlussstück-Aufnahmeausrichtung zu der zweiten Endanschlussstück-Freigabeausrichtung zu messen,
und wobei das System eine Überwachungs- und Steuereinheit (140) umfasst, welche mit dem Kraftsensor (130) und mit der einen oder den mehreren Spannvorrichtungen (30, 35) verbunden ist, wobei die Überwachungs- und Steuereinheit ausgestaltet ist, die gemessene Kraft mit einem vorgegebenen erlaubten Kraftbereich zu vergleichen und die Drehung des Übertragungsarms und der einen oder mehreren Spannvorrichtungen zu steuern, um die Kraft innerhalb des vorgegebenen erlaubten Kraftbereichs zu halten.

13. System nach einem oder mehreren der Ansprüche 1 bis 12, wobei der Pipelineführungshalterahmen zwei beabstandet angeordnete Hauptbeine (23a,b) umfasst, wobei der Abstand zwischen den Hauptbeinen den Durchgang von dem Übertragungsarm zwischen den Hauptbeinen ermöglicht, wobei jedes ein unteres Ende aufweist, welches drehbar mit dem Ablaufturm um die horizontale Halterahmendrehachse (24) verbunden ist, und wobei der Pipelineführungshalterahmen einen horizontalen röhrenförmigen Träger (23c) umfasst, welcher integriert mit den Hauptbeinen ausgebildet ist, um einen umgedrehten U-förmigen Pipelineführungshalterahmen auszubilden,
wobei der röhrenförmige Träger (23c) einen Durchmesser von mindestens 1 Meter, beispielsweise zwischen 1,5 und 2,5 Meter, aufweist,
und wobei der röhrenförmige Träger (23c) einen mittleren Abschnitt zwischen den Beinen aufweist, wobei der mittlere Abschnitt ein kreisförmiges Pipelineführungsrad (20) über ein oder mehrere Lagerungen, welche den röhrenförmigen Träger umgeben, zentral hält,
und wobei der Übertragungsarm (60) einen Strukturrahmen umfasst, welcher die Pipelineführung überspannt und Beinabschnitte (63, 64) an gegenüberliegenden Seiten des Führungsrads aufweist, wobei jeder Beinabschnitt an einer Nabe (65, 66), welche eine Lagerung aufweist, welche den mittleren Abschnitt des röhrenförmigen Trägers umgibt, endet.

14. Wasserfahrzeug zum Legen einer Pipeline auf offener See, welches mit einem System nach einem oder mehreren der Ansprüche 1 bis 13 versehen ist.

15. Verfahren zum Legen einer Pipeline auf offener See und/oder Installieren einer Unterseesteigleitung, wobei ein System nach einem der Ansprüche 1 bis 13 oder ein Wasserfahrzeug nach Anspruch 14 verwendet wird.

## Revendications

1. Système d'installation de pipeline marin pour poser un pipeline en mer et/ou pour installer une colonne montante sous-marine, ledit système comprenant :
une bobine de stockage (3) pour le stockage du pipeline (5) à installer,
une tour de lancement (10) qui est adaptée pour lancer le pipeline dans une ligne de tir (6) dans la mer,
un guide de pipeline (20) monté dans une position élevée de ladite tour de lancement et fournissant une surface de guidage arquée (21) dans un plan vertical pour guider ledit pipeline de la bobine de stockage dans la ligne de tir,
un ou plusieurs tendeurs (30, 35) montés sur la tour de lancement au-dessous dudit guide de pipeline (20),
un mécanisme de transfert d'embout de pipeline flexible adapté pour transférer un embout sur le pipeline flexible sur le guide de pipeline, lequel mécanisme de transfert comprend :
un bras de transfert (60) qui peut tourner autour d'un axe de bras de transfert horizontal (61) et par rapport au guide de pipeline, lequel bras a un côté d'attaque (67) et un côté de fuite (68) lorsqu'il est observé dans la direction de rotation sur le guide de pipeline vers la ligne de tir,
dans lequel le bras de transfert est prévu, radialement vers l'extérieur à partir de la surface de guidage de pipeline (21) et au niveau du côté de fuite (68), avec une première retenue (80) pour un adaptateur d'embout (85), laquelle première retenue est adaptée pour retenir, au niveau du côté de fuite du bras de transfert, un premier embout (5a) sur un pipeline flexible (5) qui est prévu avec un adaptateur d'embout,
dans lequel le bras de transfert est prévu avec une première poulie (75) dans une position radialement vers l'extérieur de ladite première retenue (80), ladite première poulie étant adaptée et agencée pour guider un câble entraîné de treuil (100) fixé via l'adaptateur d'embout au premier embout de sorte que, avec le bras de transfert dans sa première orientation de prélèvement d'embout (B), le premier embout (5a) est levé et l'adaptateur d'embout (85) atteint ladite première retenue permettant la mise en prise avec ladite première retenue (80) tout en étant suspendue audit câble,
dans lequel le bras de transfert, avec le premier embout retenu par ladite première retenue (80), peut tourner dans sa première orientation de libération d'embout (C) de sorte que le premier embout passe sur et autour de la surface de guidage arquée vers la ligne de tir (6),
**caractérisé en ce que :**
le bras de transfert est prévu radialement vers l'extérieur à partir de la surface de guidage de pipeline (21) et au niveau du côté d'attaque (67), avec une seconde retenue (90) pour un adaptateur d'embout (87), laquelle seconde retenue est adaptée pour retenir, au niveau du côté d'attaque du bras de transfert, un second embout (5b) sur un pipeline flexible,
dans lequel le bras de transfert peut tourner dans une seconde orientation de prélèvement d'embout (D), dans lequel l'adaptateur d'embout (87) sur le second embout sur un pipeline (5) s'incurvant sur la surface de guidage arquée (21) peut se mettre en prise avec ladite seconde retenue (90), et dans lequel le bras de transfert peut tourner dans sa seconde orientation de libération d'embout (E) de sorte que le second embout (5b) passe sur et autour de la surface de guidage arquée (21) vers la ligne de tir,
dans lequel le bras de transfert est prévu avec une seconde poulie (76) dans une position radialement vers l'extérieur de ladite seconde retenue (90), ladite seconde poulie (76) étant adaptée et agencée pour guider un câble entraîné de treuil (100) fixé, via l'adaptateur d'embout (87), au second embout (5b), de sorte qu'avec le bras de transfert dans une seconde position de libération d'embout, le second embout peut être suspendu audit câble permettant le dégagement de l'adaptateur d'embout de la seconde retenue et l'abaissement du second embout,
dans lequel lesdites première et seconde poulies (75, 76) sont décalées l'une de l'autre dans la direction de rotation du bras de transfert (60), avec la première poulie au niveau du côté de fuite et la seconde poulie au niveau du côté d'attaque du bras de transfert, de préférence lesdites première et seconde poulies étant agencées dans un plan vertical commun.

2. Système selon la revendication 1, dans lequel la première retenue et la seconde retenue sont intégrées dans un support de retenues commun (95), dans lequel le support de retenues est supporté de manière mobile dans le bras de transfert, de préférence de manière coulissante dans une direction tangentielle par rapport à la direction de rotation du bras de transfert, dans lequel dans une première position dudit support de retenues commun, la première retenue est alignée avec le premier embout à retenir et la seconde retenue est rétractée, et dans lequel dans une seconde position dudit support de retenues commun, la seconde retenue est alignée avec le second embout à retenir et la première retenue est rétractée.

3. Système selon la revendication 1 ou 2, dans lequel chaque retenue (80, 90) comprend un élément fendu ayant une fente à l'intérieur de ce dernier s'étendant dans ledit plan vertical et avec une bouche au niveau d'une extrémité de ladite fente permettant l'entrée latérale d'une partie de l'embout dans la fente, de préférence chaque retenue étant en outre prévue avec un élément de verrouillage mobile et un entraînement d'élément de verrouillage associé qui permet de déplacer l'élément de verrouillage entre une position non opérationnelle et une position de verrouillage dans laquelle l'élément de verrouillage peut être positionné dans une position de verrouillage dans laquelle il bloque la fente.

4. Système selon l'une quelconque ou plusieurs des revendications 1 à 3, dans lequel la retenue comprend un siège sphérique, et dans lequel l'adaptateur d'embout (85, 87) comprend une partie sphérique de couplage qui peut s'appuyer sur ledit siège et une tige au-dessous dudit siège pour transmettre la force de tension sur la retenue et afin de créer un support pendulaire pour l'adaptateur d'embout permettant la variation d'orientation angulaire de la tige de l'adaptateur d'embout par rapport à la retenue.

5. Système selon la revendication 4, dans lequel la tige de l'adaptateur d'embout (87) associée au second embout a un plus grand diamètre, par exemple au moins deux fois supérieur, que la tige de l'adaptateur d'embout associée à la première retenue.

6. Système selon l'une quelconque ou plusieurs des revendications 1 à 5, dans lequel le guide de pipeline est une roue de guide de pipeline circulaire (20) qui peut tourner autour d'un axe de roue de guide horizontal (22), coïncidant de préférence avec l'axe de rotation de bras de transfert (61).

7. Système selon l'une quelconque ou plusieurs des revendications 1 à 6, dans lequel le guide de pipeline (20) et le bras de transfert (60) sont supportés par un bâti de support (23) qui est raccordé de manière mobile à la tour de lancement dans une position élevée de ladite tour de lancement, dans lequel un dispositif ajusteur (25) est agencé entre le bâti de support et la tour de lancement, lequel dispositif ajusteur est adapté pour ajuster la position du bâti de support par rapport à la tour de lancement et ajuster ainsi une distance horizontale entre la ligne de tir et le guide de pipeline.

8. Système selon la revendication 7, dans lequel le bâti de support (23) est raccordé de manière pivotante autour d'un axe de pivot de bâti de support horizontal (24) à la tour de lancement (10) dans une position élevée de ladite tour de lancement, dans lequel le dispositif ajusteur (25) est agencé entre le bâti de support et la tour de lancement pour ajuster l'orientation pivotante du bâti de support et ajuster ainsi la distance horizontale entre la ligne de tir et le guide de pipeline.

9. Système selon la revendication 7 ou 8, dans lequel le système comprend une unité de commande reliée audit dispositif ajusteur (25) et audit entraînement de bras de transfert (70, 71, 72),
et dans lequel ladite unité de commande est programmée pour avoir un second mode de jeu d'embout dans lequel, avec le bras de transfert dans la seconde orientation de libération d'embout avec le second embout suspendu au câble, libéré de la retenue et aligné avec la ligne de tir, le dispositif ajusteur est actionné pour déplacer le bâti de support et éloigner ainsi le guide de pipeline de la ligne de tir, alors que simultanément le bras de transfert est entraîné en rotation par l'entraînement de bras de transfert afin de maintenir le second connecteur d'extrémité aligné avec la ligne de tir, au moins jusqu'à ce que le guide de pipeline ait été suffisamment dégagé de la ligne de tir pour permettre l'abaissement consécutif du second embout suspendu sans interférer avec le guide de pipeline.

10. Système selon l'une quelconque ou plusieurs des revendications 1 à 9, dans lequel l'installation comprend une poulie de tension de retenue qui est montée ou doit être montée sur un pont du navire, généralement au-dessous du côté du guide de pipeline à distance de la ligne de tir, ladite poulie de tension de retenue, dans le transfert d'un second embout, guidant ledit câble entraîné de treuil et permettant d'appliquer la tension de retenue pendant ledit transfert.

11. Système selon l'une quelconque ou plusieurs des revendications 1 à 10, dans lequel chaque tendeur (30, 35) comprenant un bâti de tendeur et plusieurs chenilles supportés par ledit bâti de tendeur, lesdits chenilles étant adaptés pour mettre en prise le pipeline et supporter au moins une partie du poids du pipeline lancé, le bâti de tendeur étant supporté via un ensemble de support, l'ensemble de support des un ou plusieurs bâtis de tendeur étant adapté pour permettre le déplacement du bâti de tendeur par rapport à la tour entre une position active dans laquelle la ligne de tir s'étend à travers le bâti de tendeur et entre les chenilles, de sorte que les chenilles peuvent se mettre en prise sur un pipeline, et une position non opérationnelle rétractée,
et dans lequel la tour de lancement est prévue avec un chariot auxiliaire (47) adapté pour supporter le poids du pipeline lancé et suspendu au câble A&R, lequel chariot est mobile le long des rails (48) le long de la ligne de tir lorsque les un ou plusieurs bâtis de tendeur sont dans la position non opérationnelle rétractée, à partir d'une position au-dessus du tendeur le plus haut jusqu'à une position au-dessous du tendeur le plus bas, le rail étant supporté par la tour de lancement,
et dans lequel le chariot est prévu avec une retenue, par exemple une pince, adaptée pour se mettre en prise sur l'adaptateur d'embout (87) sur un second embout qui est suspendu via ledit câble entraîné de treuil (100) dans la ligne de tir.

12. Système selon l'une quelconque ou plusieurs des revendications 1 à 11, dans lequel le bras de transfert est prévu avec un capteur de force (130) adapté pour mesurer la force exercée par le second embout (5b) sur la seconde retenue (90), au moins pendant la rotation du bras de transfert de la seconde orientation de prélèvement d'embout à la seconde orientation de libération d'embout,
et dans lequel le système comprend une unité de surveillance et de commande (140) raccordée audit capteur de force (130) et auxdits un ou plusieurs tendeurs (30, 35), l'unité de surveillance et de commande étant adaptée pour comparer la force mesurée avec une plage de force admissible et pour commander la rotation du bras de transfert et des un ou plusieurs tendeurs afin de maintenir la force à l'intérieur de ladite plage de force admissible prédéterminée.

13. Système selon l'une quelconque ou plusieurs des revendications 1 à 12, dans lequel le bâti de support de guide de pipeline comprend deux pattes principales espacées (23a, b), l'espacement entre lesdites pattes principales permettant le passage du bras de transfert entre lesdites pattes principales, chacune ayant une extrémité inférieure raccordée de manière pivotante à la tour de lancement autour dudit axe de pivot de bâti de support horizontal (24), et dans lequel le bâti de support de guide de pipeline comprend une poutrelle tubulaire horizontale (23c) qui est intégrée avec les pattes principales afin de former un bâti de support de guide de pipeline en forme de U inversé,
dans lequel la poutrelle tubulaire (23c) a un diamètre d'au moins 1 mètre, par exemple entre 1,5 et 2,5 mètres,
et dans lequel la poutrelle tubulaire (23c) a une partie centrale entre lesdites pattes principales, ladite partie centrale supportant centralement une roue de guide de pipeline circulaire (20) via un ou plusieurs paliers encerclant la poutrelle tubulaire,
et dans lequel le bras de transfert (60) comprend un bâti structurel qui enjambe le guide de pipeline et a des parties de patte (63, 64) au niveau des côtés opposés de la roue de guidage, avec chaque partie de patte qui se termine par un moyeu (65, 66) comprenant un palier encerclant la partie centrale de la poutrelle tubulaire.

14. Navire pour poser un pipeline en mer prévu avec un système selon l'une quelconque ou plusieurs des revendications 1 à 13.

15. Procédé pour poser un pipeline en mer et/ou installer une colonne montante sous-marine, dans lequel on utilise un système selon l'une quelconque des revendications 1 à 13 ou un navire selon la revendication 14.
